# EUROPEAN PATENT SPECIFICATION

(11) **EP 3 994 504 B1**
(45) Date of publication and mention of the grant of the patent: **03.09.2025**
(21) Application number: 20736629.5
(22) Date of filing: 01.07.2020
(51) Int. Cl.: G02B 6/44

(54) **DEVICES, SYSTEMS, AND METHODS FOR ROUTING CABLES INSIDE A TELECOMMUNICATIONS CLOSURE**
VORRICHTUNGEN, SYSTEME UND VERFAHREN ZUR LEITWEGLENKUNG VON KABELN INNERHALB EINES TELEKOMMUNIKATIONSVERSCHLUSSES
DISPOSITIFS, SYSTÈMES ET PROCÉDÉS POUR ACHEMINER DES CÂBLES À L'INTÉRIEUR D'UNE FERMETURE DE TÉLÉCOMMUNICATIONS

(30) Priority: 01.07.2019 US 201962869289 P; 09.12.2019 US 201962945710 P; 13.01.2020 US 202062960452 P
(43) Date of publication of application: 11.05.2022
(60) Divisional application: 25181585.8
(73) Proprietor: CommScope Connectivity Belgium BVBA, 3010 Kessel-Lo (BE)
(72) Inventor: FISCHER, Kurt Thomas, Hickory, North Carolina 28602 (US); ZAVREL, Jiri, Hickory, North Carolina 28602 (US); NOVAK, David, Hickory, North Carolina 28602 (US); VASTMANS, Kristof, Hickory, North Carolina 28602 (US)
(74) Representative: Murgitroyd & Company
(86) International application number: PCT/EP2020/068495
(87) International publication number: WO 2021/001416

(56) References cited:
- EP-A1- 1 921 472
- WO-A1-2008/033997
- WO-A1-2018/065423
- US-A- 5 142 606
- US-B1- 6 438 310

## Description

### CROSS-REFERENCE TO RELATED APPLICATIONS

This application claims the benefit of U.S. Patent Application Serial No. 62/869,289, filed on July 1, 2019, and claims the benefit of U.S. Patent Application Serial No. 62/945,710, filed on December 9, 2019, and claims the benefit of U.S. Patent Application Serial No. 62/960,452, filed on January 13, 2020.

### BACKGROUND

Fiber optic networks utilize fiber optic cables that often require optical fiber splicing and storage. Typically, as is disclosed in WO 2008/033997 A1 one or more feeder cables from a service provider enter a telecommunications closure for splicing with one or more distribution cables. A plurality of splice trays store the splices inside the telecommunications closure. The one or more distribution cables exit the telecommunications closure to deliver high bandwidth communication capabilities to one or more subscriber locations.

### SUMMARY

This disclosure relates generally to devices used in the telecommunications industry. More particularly, this disclosure relates to devices for routing optical fibers inside a telecommunications closure.

One aspect relates to a cable guide for a telecommunications closure as specified in claim 1.

Another aspect relates to a telecommunications closure as specified in claim 9.

Another aspect relates to a method of routing cables as specified in claim 12.

In one example embodiment of the cable guide, one or more of the openings can be initially closed, and selectively opened, as desired. In alternative embodiments, one or more of the openings can be initially open, and selectively closed, as desired.

Another aspect relates to a cable guide including an arcuate pathway positioned along a minor side of the cable guide.

### DESCRIPTION OF THE FIGURES

The following drawing figures, which form a part of this application, are illustrative of the described technology and are not meant to limit the scope of the disclosure in any manner.
FIG. 1 is a front isometric view of a panel of a telecommunications closure.
FIG. 2 is a front view of the panel.
FIG. 3 is a detailed front view of a top portion of the panel.
FIG. 4 is a rear isometric view of the panel.
FIG. 5 is a detailed front view of a bottom portion of the panel.
FIG. 6 is an isometric view of a first cable guide.
FIG. 7 is a front view of the first cable guide.
FIG. 8 is a top view of the first cable guide.
FIG. 9 is an isometric view of a second cable guide.
FIG. 10 is a front view of the second cable guide.
FIG. 11 is a top view of the second cable guide.
FIG. 12 is a front view of an alternative example of a cable guide.
FIG. 13 is an isometric view of an alternative panel of a telecommunications closure.
FIG. 14 is an exploded front isometric view of the panel of FIG. 13.
FIG. 15 is a front view of the panel of FIG. 13.
FIG. 16 is a front isometric view of a cable guide in the panel of FIGS 13-15.
FIG. 17 is a front view of the cable guide of FIG. 16.
FIG. 18 is a rear view of the cable guide of FIG. 16.
FIG. 19 is a top view of the cable guide of FIG. 16.
FIG. 20 is a bottom view of the cable guide of FIG. 16.
FIG. 21 is a right end view of the cable guide of FIG. 16.
FIG. 22 is a left end view of the cable guide of FIG. 16.
FIG. 23 is a rear isometric view of the cable guide of FIG. 16.
FIG. 24 shows the cable guide of FIG. 16 with three different openings, showing doors separated from the openings to expose the openings for the passage of fiber optic cables.
FIGS. 25-29 show similar views of the panel of FIG. 15, illustrating example fiber optic cables managed by the panel.
FIG. 30 is a front isometric view of another panel for a telecommunications closure.
FIG. 31 is a side view of the panel of FIG. 30.
FIG. 32 is an exploded front isometric view of the panel of FIG. 30.
FIG. 33 is an exploded rear isometric view of the panel of FIG. 30.
FIG. 34 shows the panel inverted upside down with respect to the orientation shown in FIGS. 30-33.
FIG. 35 is a front isometric view of another panel for a telecommunications closure.
FIG. 36 is a side view of the panel of FIG. 35.
FIG. 37 is a front isometric view of a cable guide in the panel of FIG. 35.
FIG. 38 is a front view of the cable guide of FIG. 37.
FIG. 39 is a top view of the cable guide of FIG. 37.
FIG. 40 is a front view of the panel of FIG. 35.
FIG. 41 is a front view of another panel for a telecommunications closure.
FIG. 42 is a front view of another panel for a telecommunications closure.
FIG. 43 illustrates a method for assembling a panel for a telecommunications closure.

### DETAILED DESCRIPTION

Various embodiments will be described in detail with reference to the drawings, wherein like reference numerals represent like parts and assemblies throughout the several views. Reference to various embodiments does not limit the scope of the claims attached hereto. Additionally, any examples set forth in this specification are not intended to be limiting and merely set forth some of the many possible embodiments for the appended claims.

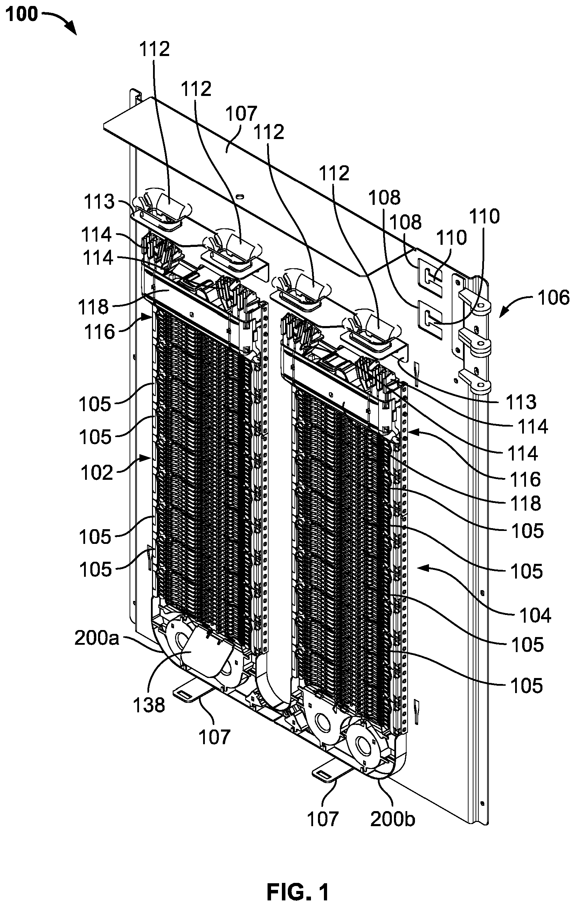

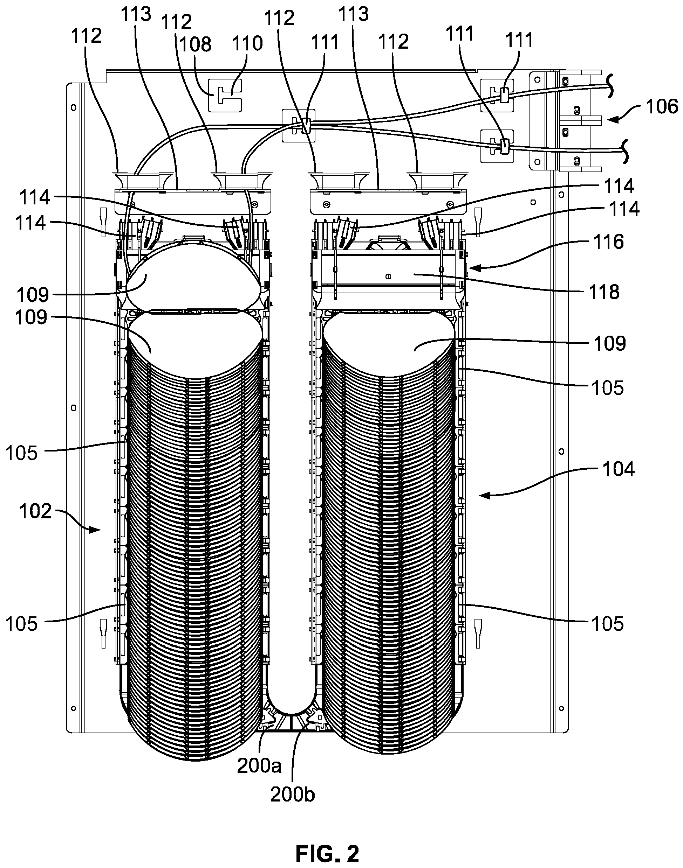

FIGS. 1 and 2 are isometric and front views, respectively, of a panel 100 of a telecommunications closure. The telecommunications closure houses fiber optic equipment in a telecommunications network. The panel 100 includes one or more projecting edges 107 that support attachment to additional panels of the telecommunications closure. The additional panels such as side panels, top and bottom panels, front panel, door panel, etc. are not shown.

It is contemplated that the telecommunications closure including the panel 100 can be mounted in a variety of vertical and horizontal positions. For example, in some embodiments, the panel 100 can be mounted upside down relative to the orientation shown in FIGS. 1 and 2. In some further embodiments, the panel 100 can be mounted horizontally. Thus, references to orientation including above, below, up, down, left side, right side, and the like are relative.

The panel 100 includes a cable entry portion 106 next to one or more connector ports in the closure. The connector ports receive one or more fiber optic cables including feeder cables and distribution cables that run inside and outside of the telecommunications closure.

In the example depicted in the figures, the panel 100 includes a first column 102 of groove plates 105 and a second column 104 of groove plates 105. In alternative embodiments, the panel 100 may include only one column of groove plates. In further embodiments, the panel 100 may include more than two columns of groove plates such as three or more columns.

As shown in FIG. 1, the first and second columns 102, 104 of groove plates 105 each include a plurality of groove plates 105. In some embodiments, the groove plates 105 are similar to the groove plates described in U.S. Provisional Patent Application No. 62/695,525 filed July 9, 2018.

As shown in FIG. 2, each groove plate 105 holds a plurality of trays 109. Each tray 109 is pivotable with respect to the groove plates 105. Each tray 109 can be used to manage optical fibers and store splices. The plurality of trays 109 held by the groove plates 105 include splice trays, splitter trays, wave division multiplexer trays, storage trays, and the like.

In some examples, the first column 102 of groove plates 105 holds a first type of tray while the second column 104 of groove plates 105 holds a second type of tray that is different from the first type of tray. In alternative examples, the first and second columns 102, 104 of groove plates 105 each hold the same type of tray. In further examples, the first and second columns 102, 104 of groove plates 105 each hold a plurality of different types of trays.

In one example, one column of groove plates 105 holds a plurality of trays for managing and splicing incoming cables such as feeder cables from a service provider while the other column of groove plates 105 holds a plurality of trays for managing and splicing outgoing cables such as distribution cables routed to one or more subscriber locations.

The panel 100 includes one or more apertures 108. Each aperture 108 includes a tab 110. In some embodiments, the tabs 110 have a substantially "T" shape. One or more clamps 111 are attachable to the tabs 110 to fix one or more cables to the panel 100. The one or more clamps 111 can be in the form of a hose clamp, zip tie, clip, and the like. In some embodiments, the one or more clamps 111 slide over the tabs 110. In other embodiments, the clamps 111 clip onto the tabs 110. The one or more clamps 111 can help to position one or more cables from the cable entry portion 106 toward the first and second columns 102, 104 of groove plates 105.

Funnels 112 direct the one or more cables from the cable entry portion 106 toward the first and second columns 102, 104 of groove plates 105. Also, the funnels 112 can direct one or more cables from the first and second columns 102, 104 of groove plates 105 toward the cable entry portion 106. The funnels 112 are attached to the panel 100 by a plate shaped elbow 113. A funnel 112 is positioned above each side of each column of groove plates 105.

Below the funnels 112 are grooves 114 positioned on each side of the first and second columns 102, 104 of groove plates 105. The grooves 114 guide one or more cables between the funnels 112 and cable managers 116. For example, the grooves 114 can guide one or more cables from the funnels 112 toward the cable managers 116. Also, the grooves 114 can guide one or more cables from the cable managers 116 toward the funnels 112. In the depicted example, the cable managers 116 are positioned above the first and second columns 102, 104 of groove plates 105. Alternatively, the cable managers 116 can be positioned below the first and second columns 102, 104 of groove plates 105. The cable managers 116 each have a removable cover 118.

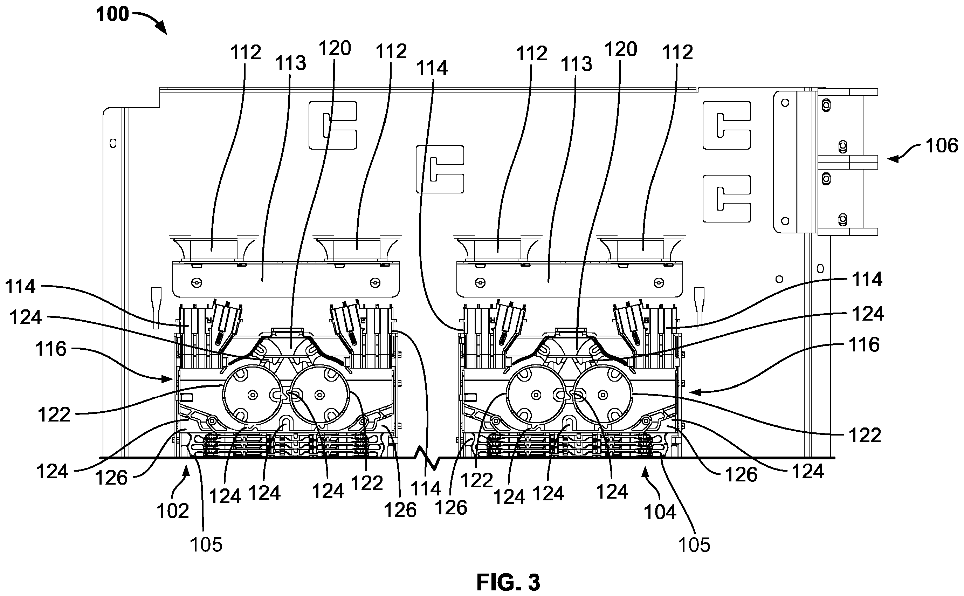

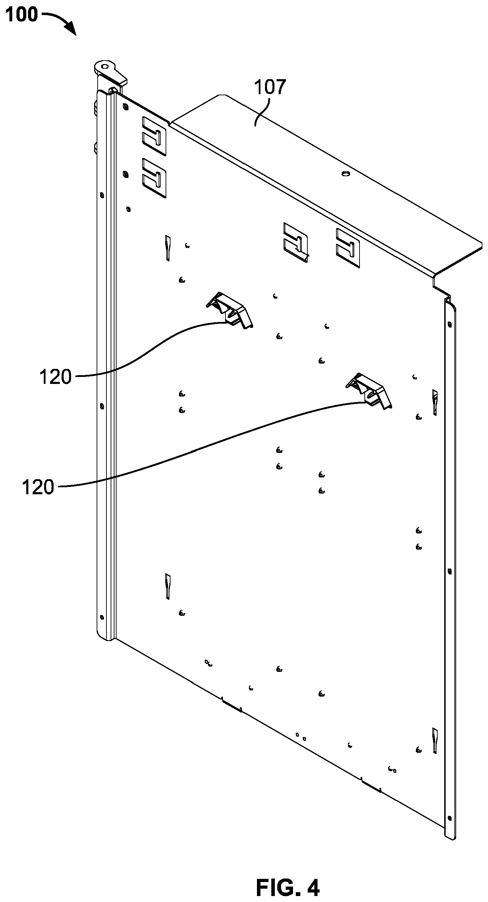

FIG. 3 is a detailed front view of the panel 100 showing the cable managers 116 without the removable covers 118. FIG. 4 is an isometric rear view of the panel 100. Referring now to FIGS. 3 and 4, each cable manager 116 includes an aperture 120 that provides access from a front portion to a rear portion of the panel 100. The apertures 120 enable the one or more cables to go from the front portion to the rear portion of the panel 100. In some embodiments, the telecommunications closure can include a second panel behind the panel 100 such that one or more cables can be routed through the aperture 120 to the second panel.

Each cable manager 116 includes one or more spools 122. The spools 122 can be used to route cables between opposite sides (e.g., left and right sides) of a column of groove plates 105. Also, the spools 122 can be used to change the direction of the cables. In some examples, excess cable can be looped around the spools 122 for storage. Outlets 126 on opposite sides of the cable managers 116 guide the cables to one side (e.g., left or right side) of a first groove plate in a column of groove plates. A plurality of tabs 124 manage the cables inside the cable managers 116 such as around the spools 122 and in the outlets 126.

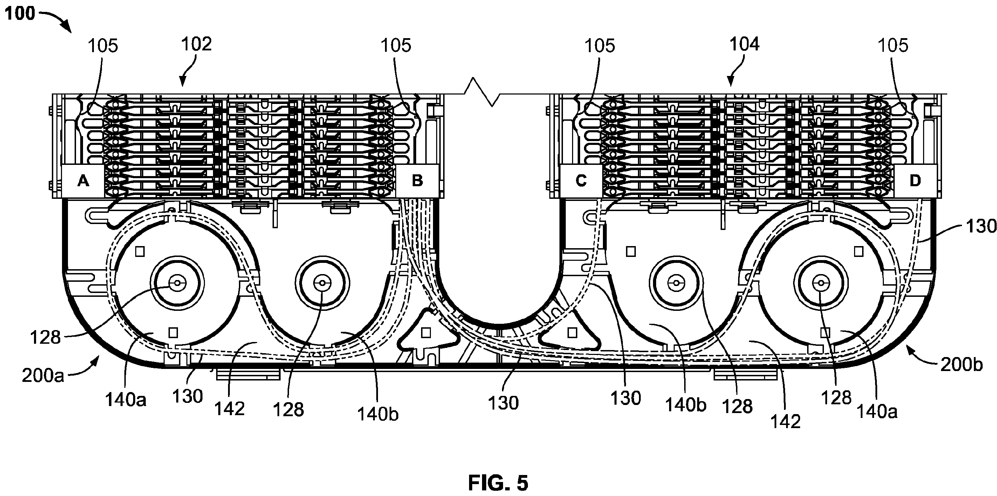

FIG. 5 is a detailed front view of a bottom portion of the panel 100. Referring now to FIGS. 1, 2, and 5, a first cable guide 200a and a second cable guide 200b are attached to the panel 100 below the first and second columns 102, 104 of groove plates 105, respectively. In alternative embodiments, the first cable guide 200a and a second cable guide 200b are attached to the panel 100 above the first and second columns 102, 104 of groove plates 105, respectively. In some embodiments, the first and second cable guides 200a, 200b are attached to the panel 100 by one or more fasteners 128 including rivets, screws, and the like. In other embodiments, the first and second cable guides 200a, 200b are attached to the panel 100 by a snap-fit. The first and second cable guides 200a, 200b can be molded from plastic or similar material.

The first and second cable guides 200a, 200b are mirrored parts and share the same features. In a preferred embodiment, the panel 100 includes both the first and second cable guides 200a, 200b. However, it is contemplated that in some embodiments the panel 100 may include only one of the first and second cable guides 200a, 200b. Additionally, it is contemplated that the panel 100 may include three or more cable guides.

The first and second cable guides 200a, 200b provide a smooth transition for cables 130 from at least one of the first and second columns 102, 104 of groove plates 105. In some examples, a single cable guide 200a, 200b can provide a transition for cables from one of the first and second columns 102, 104 of groove plates 105 to another portion of the panel 100. In such examples, the single cable guide 200a, 200b eliminates a stepped transition for the cables from the groove plates 105 to the other portion of the panel 100.

In the example illustrated in FIG. 5, the first and second cable guides 200a, 200b provide a smooth transition for cables between the first and second columns 102, 104 of groove plates 105 such that cables can smoothly transition from the first column 102 of groove plates 105 to the second column 104 of groove plates 105, or alternatively, from the second column 104 of groove plates 105 to the first column 102 of groove plates 105. As shown in FIG. 5, a first side of the first column 102 of groove plates 105 is labeled "A", a second side of the first column 102 of groove plates 105 is labeled "B", a first side of the second column 104 of groove plates 105 is labeled "C", and a second side of the second column 104 of groove plates 105 is labeled "D". The first and second cable guides 200a, 200b provide a plurality of fiber routing options for cables 130 between the first and second columns 102, 104 of groove plates 105.

As shown in FIG. 5, the first and second cable guides 200a, 200b provide a plurality of fiber routing options for cables 130 including, but not limited to, fiber routing options between (1) A-A; (2) A-B; (3) B-A; (4) A-C; (5) C-A; (6) A-D; (7) D-A; (8) B-B; (9) B-C; (10) C-B; (11) B-D; (12) D-B; (13) C-C; (14) C-D; (15) D-C; and (16) D-D.

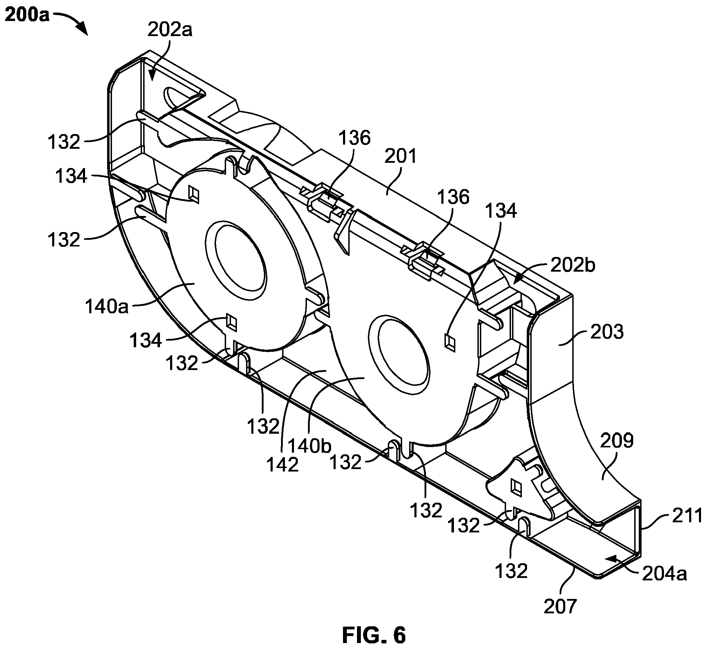

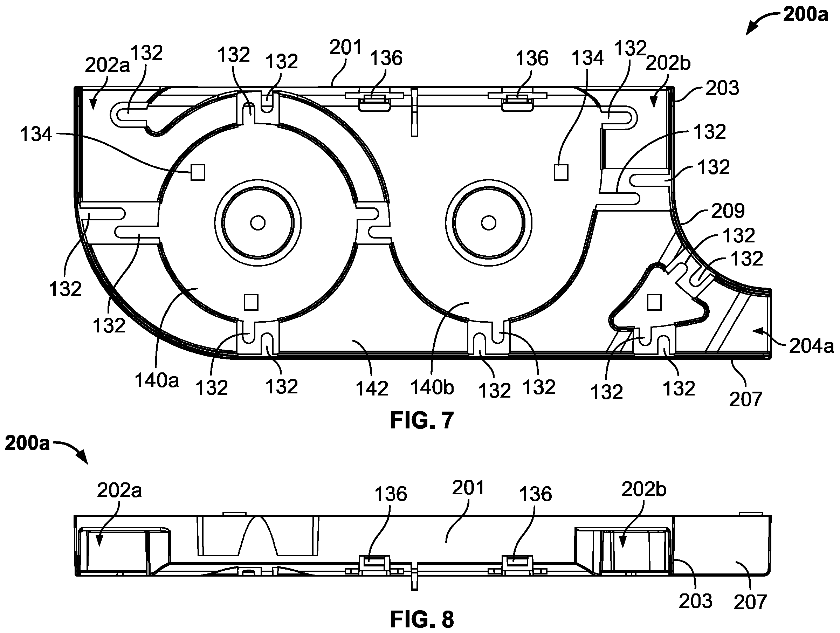

FIGS. 6, 7, and 8 are isometric, front, and top views of the first cable guide 200a. The first cable guide 200a includes a first opening 202a to receive one or more cables 130 from the first side of the first column 102 of groove plates (labeled "A" in FIG. 5), a second opening 202b to receive one or more cables 130 from the second side of the first column 102 of groove plates (labeled "B" in FIG. 5), and a third opening 204a to transfer and/or receive one or more cables 130. For example, the third opening 204a transfers one or more cables 130 from the first cable guide 200a to the second cable guide 200b. In another example, the third opening 204a receives one or more cables 130 from the second cable guide 200b or from elsewhere on the panel 100.

As shown in FIGS. 6-8, the first opening 202a is on a first side 201 of the first cable guide 200a, and the second opening 202b is opposite the first opening 202a on the first side 201. The third opening 204a is on a second side 203 that is orthogonal to the first side 201.

Additionally, the first cable guide 200a includes a projection 207 on the second side 203. The third opening 204a is at a distal end of the projection 207. In some examples, the projection 207 extends in a direction parallel to the first side 201. In some further examples, a transition 209 between the second side 203 and the projection 207 is curved such that cables routed between the second opening 202b and the third opening 204a have a smooth transition without any sharp turns or bends that can damage the optical fibers within the cables.

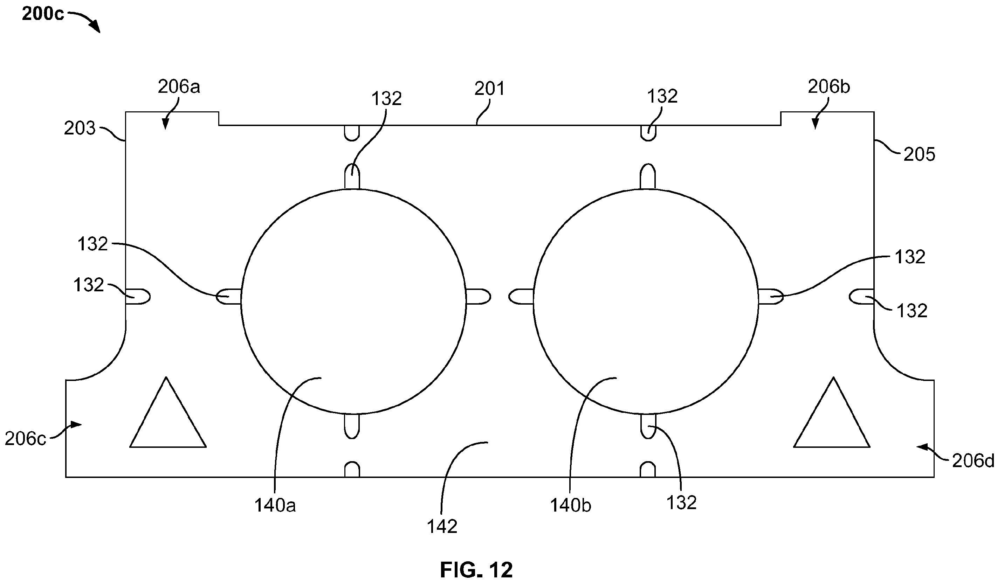

The first cable guide 200a includes one or more arcuate features 140a, 140b that project from a base 142 of the cable guide to define cable passageways inside the first cable guide 200a. In some examples, the first cable guide 200a includes only a first arcuate feature 140a. In some examples, the first cable guide 200a includes a second arcuate feature 140b such that the first and second arcuate features 140a, 140b together define the cable passageways. In the example illustrated in FIGS. 5-8, the first and second arcuate features 140a, 140b each have a different shape. For example, the first arcuate feature 140a has a circular shape whereas the second arcuate feature 140b has a tear drop shape. In this example, a cable passageway is defined between the first and second arcuate features 140a, 140b. In an alternative example illustrated in FIG. 12, the first and second arcuate features 140a, 140b each have the same circular shape.

The first arcuate feature 140a defines cable passageways proximate the first opening 202a, and the second arcuate feature 140b defines cable passageways proximate the second opening 202b. As an illustrative example, and with reference now to FIG. 5, a cable 130 can be routed from the second opening 202b around the second arcuate feature 140b, through a passageway between the first and second arcuate features 140a, 140b, around the first arcuate feature 140a, and past the second arcuate feature 140b for routing back to the second opening 202b such that the fiber route is B-B (see above description of fiber routing options).

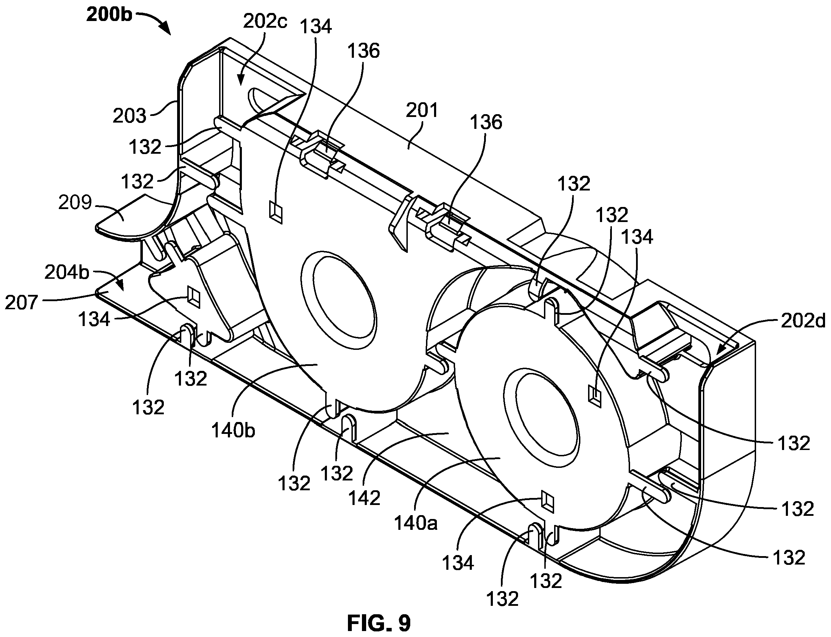

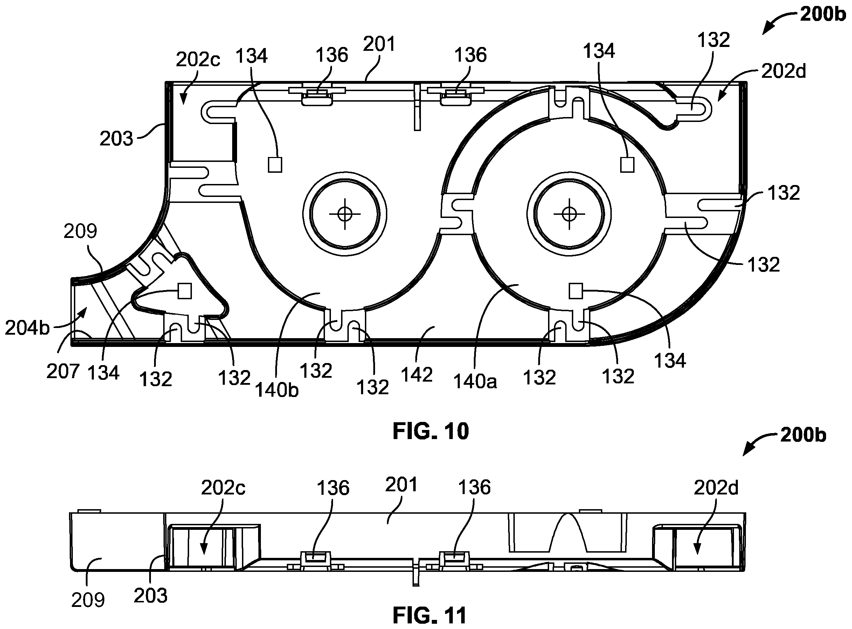

FIGS. 9, 10, and 11 are isometric, front, and top views of the second cable guide 200b. The second cable guide 200b includes a first opening 202c to receive one or more cables 130 from the first side of the second column 104 of groove plates 105 (labeled "C" in FIG. 5), a second opening 202d to receive one or more cables 130 from the second side of the second column 104 of groove plates 105 (labeled "D" in FIG. 5), and a third opening 204b to transfer and/or receive one or more cables 130. For example, the third opening 204b transfers one or more cables 130 from the second cable guide 200b to the first cable guide 200a. In another example, the third opening 204b receives one or more cables 130 from the first cable guide 200a.

As shown in FIGS. 9-11, the first opening 202c is on a first side 201 of the second cable guide 200b, and the second opening 202d is opposite the first opening 202c on the first side 201. The third opening 204b is on a second side 203 that is orthogonal to the first side 201.

Additionally, the second cable guide 200b includes a projection 207 on the second side 203. The third opening 204b is at a distal end of the projection 207. In some examples, the projection 207 extends in a direction parallel to the first side 201. In some further examples, a transition 209 between the second side 203 and the projection 207 is curved such that cables routed between the first opening 202c and the third opening 204b have a smooth transition without any sharp turns or bends that can damage the optical fibers within the cables. Also, the first and second cable guides 200a, 200b are mirrored parts such that the projections 207 abut one another on the panel 100 for transferring and receiving cables through the third openings 204a, 204b of each of the first and second cable guides 200a, 200b.

The second cable guide 200b includes one or more arcuate features 140a, 140b that project from a base 142 of the cable guide to define cable passageways inside the second cable guide 200b. In some examples, the second cable guide 200b includes only a first arcuate feature 140a. In some examples, the second cable guide 200b includes a second arcuate feature 140b such that the first and second arcuate features 140a, 140b together define the cable passageways. In the example illustrated in FIGS. 5 and 9-11, the first and second arcuate features 140a, 140b each have a different shape. For example, the first arcuate feature 140a has a circular shape whereas the second arcuate feature 140b has a tear drop shape.

The first arcuate feature 140a defines cable passageways proximate the second opening 202d, and the second arcuate feature 140b defines cable passageways proximate the first opening 202c. As an illustrative example, and with reference now to FIG. 5, a cable 130 can be routed from the second opening 202b in the first cable guide 200a, through the third opening 204a in the first cable guide 200a, and into the third opening 204b of the second cable guide 200b. Thereafter, in the second cable guide 200b, the cable 130 can be routed around the second arcuate feature 140b, through a passageway between the first and second arcuate features 140a, 140b, around the first arcuate feature 140a, and past the second arcuate feature 140b for routing the cable 130 back through the third opening 204b of the second cable guide 200b and into the third opening 204a of the first cable guide 200a. Thereafter, in the first cable guide 200a, the cable 130 can be routed back to the second opening 202b such that the fiber route is B-B.

In another illustrative example, a cable 130 can be routed from the second opening 202b in the first cable guide 200a, through the third opening 204a in the first cable guide 200a, and into the third opening 204b of the second cable guide 200b. Thereafter, the cable 130 can be routed to the first opening 202c of the second cable guide 200b such that the fiber route is B-C.

In yet another illustrative example, a cable 130 can be routed from the second opening 202b in the first cable guide 200a, through the third opening 204a in the first cable guide 200a, and into the third opening 204b of the second cable guide 200b. Thereafter, the cable 130 can be routed past the second arcuate feature 140b, and around the first arcuate feature 140a to the second opening 202d of the second cable guide 200b such that the fiber route is B-D.

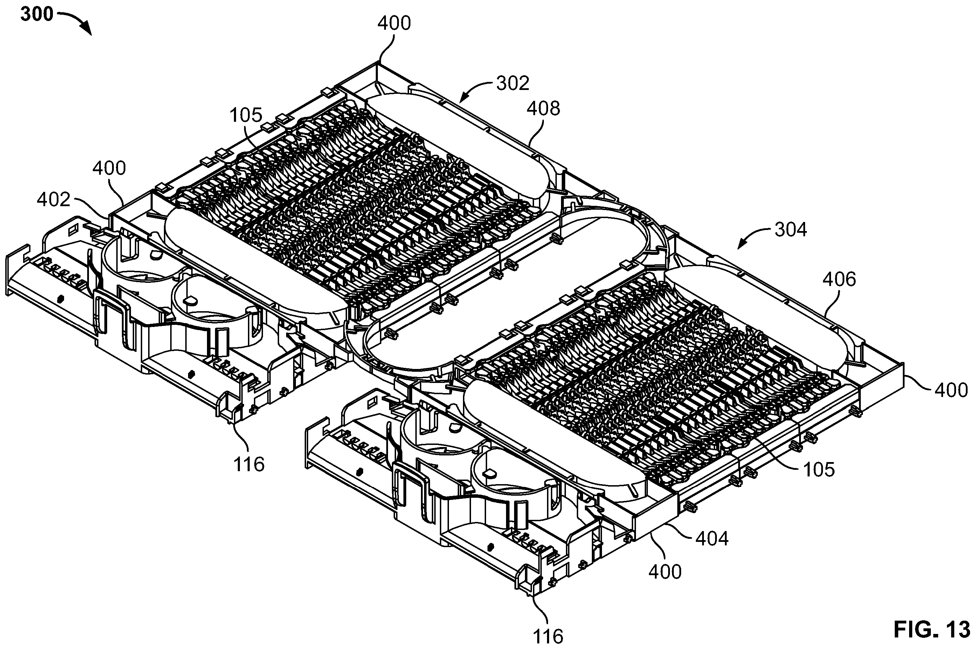

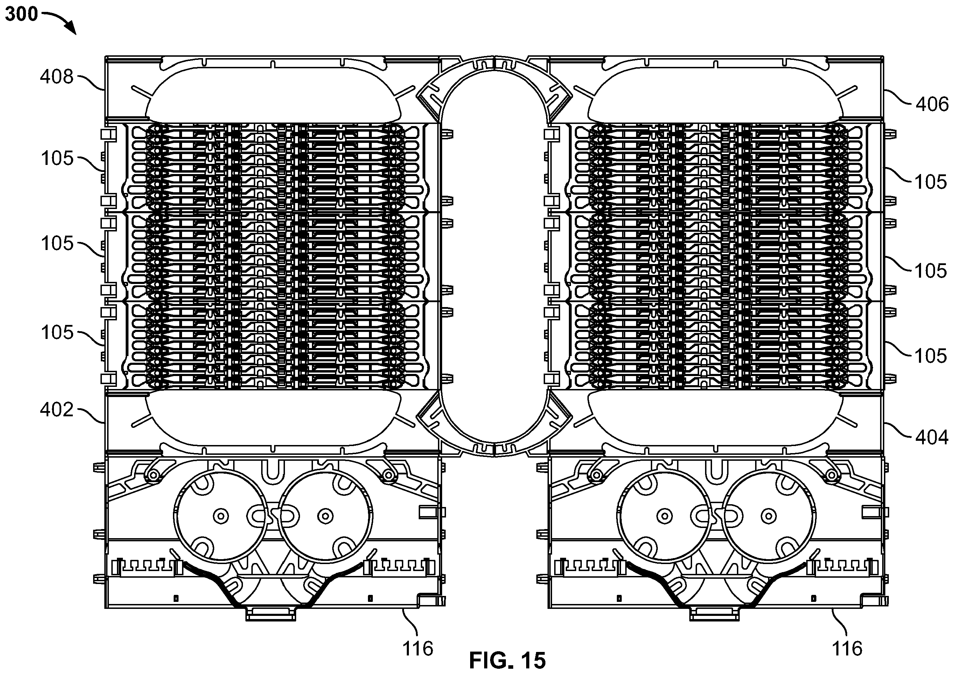

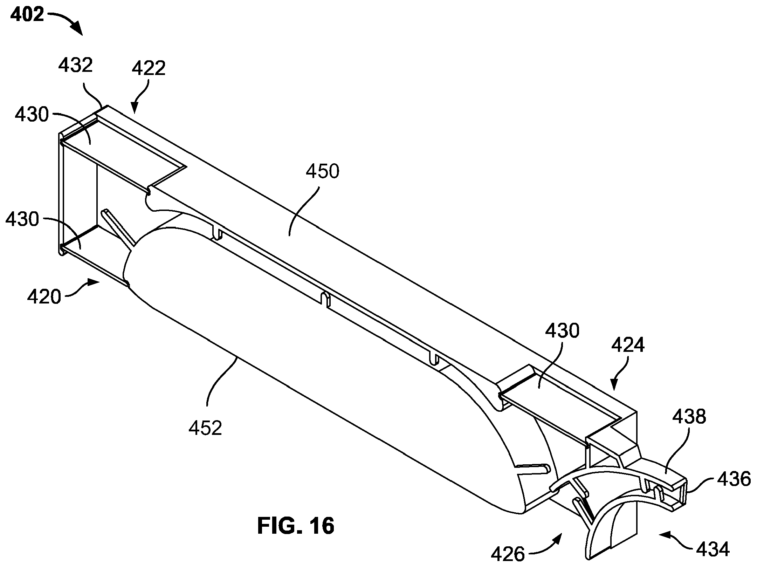

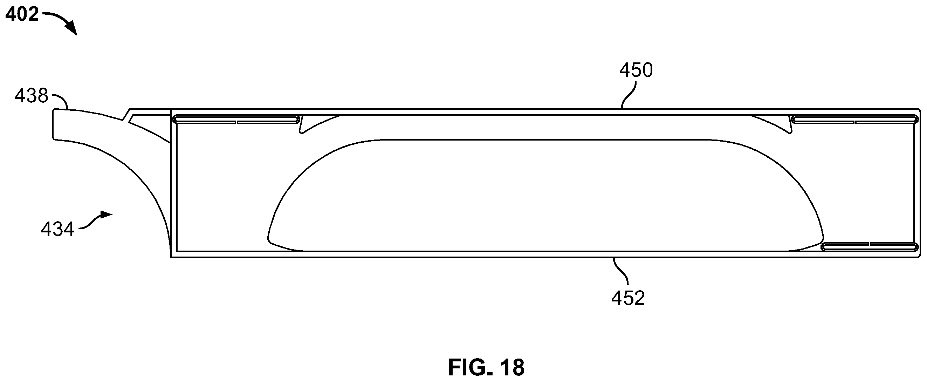

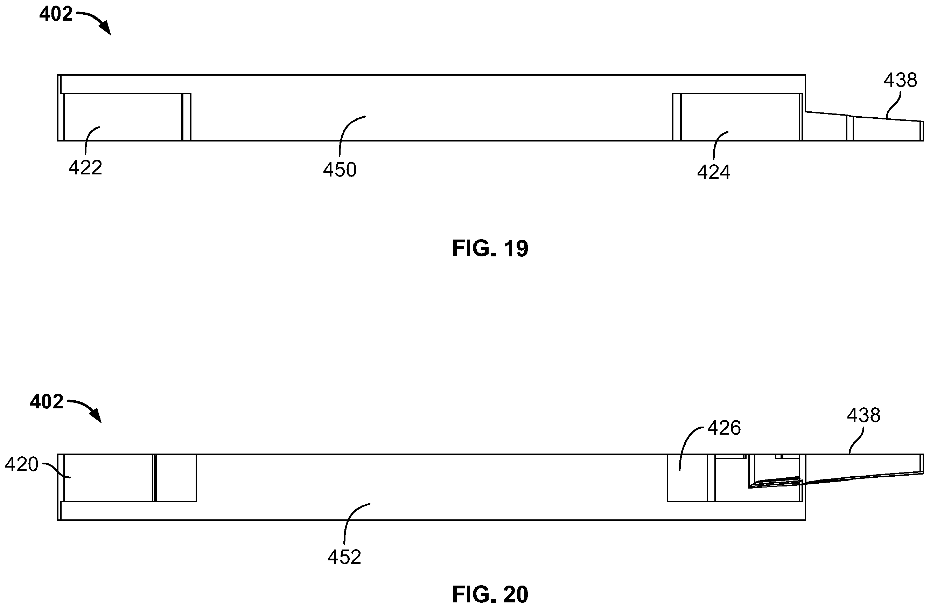

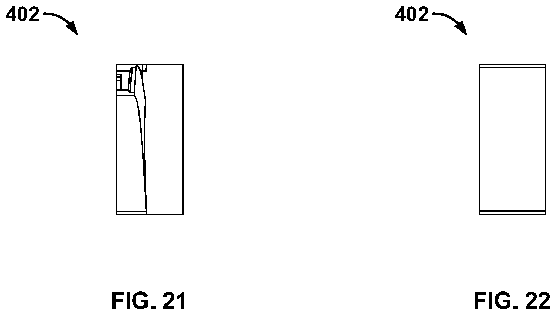

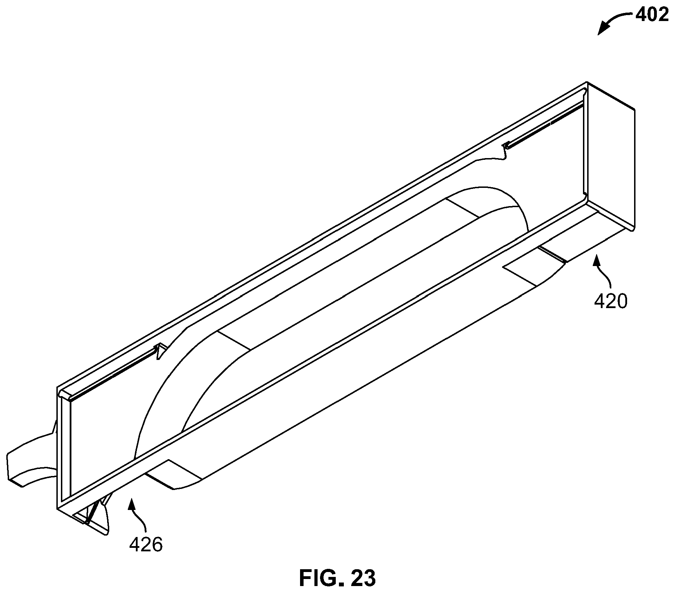

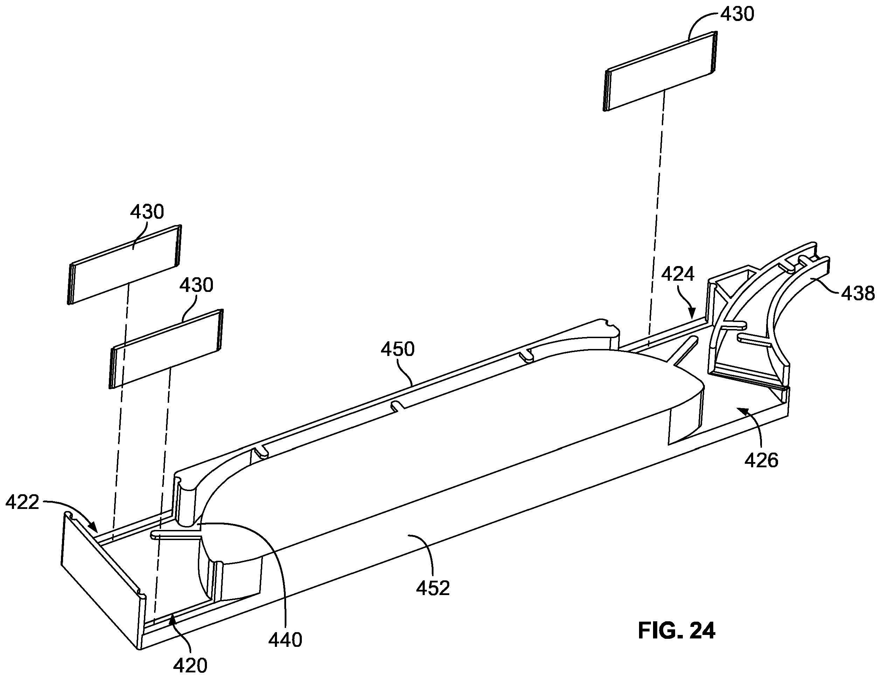

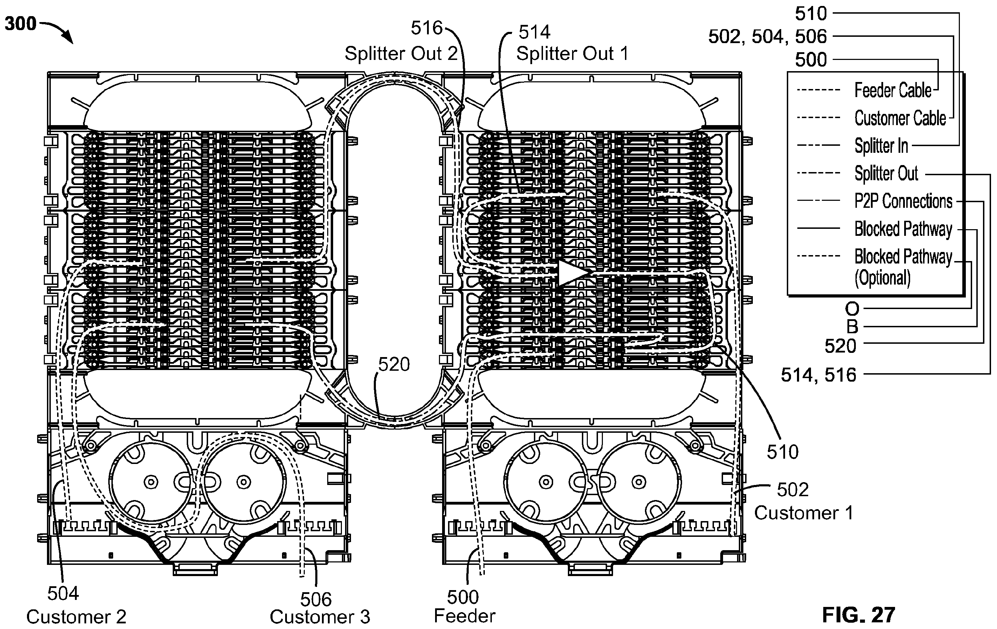

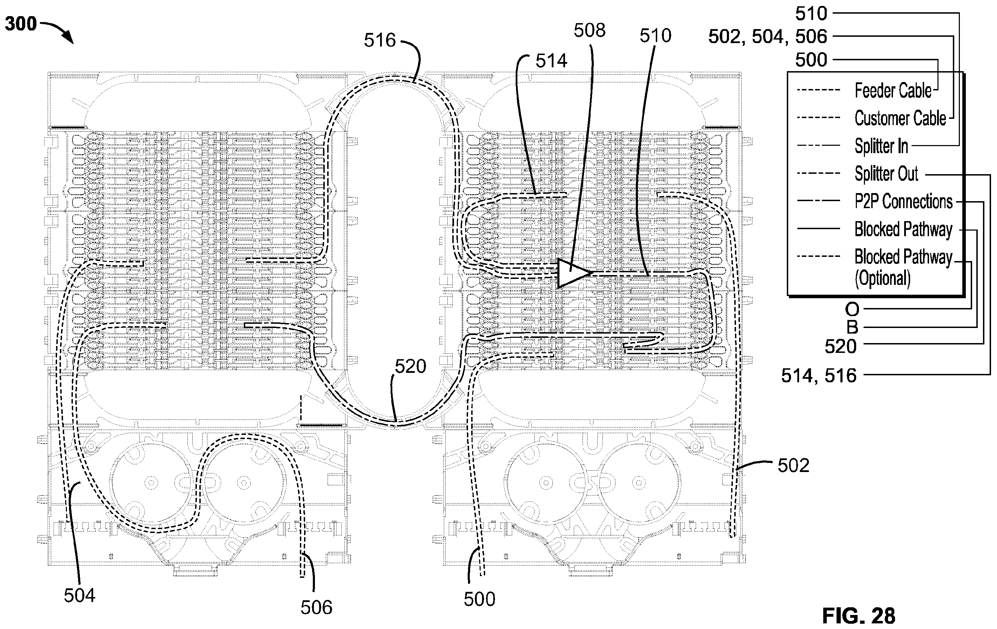

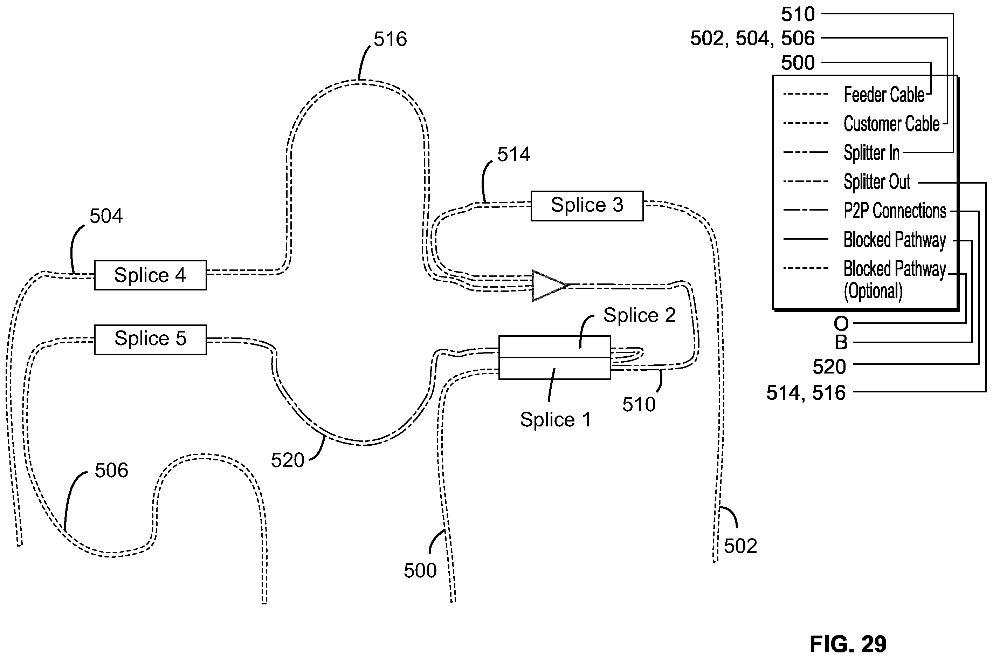

In some examples, the cable guides 200a, 200b can include one or more doors (such as the doors 430 shown in FIG. 16 and described in more detail below with respect to the embodiment of FIGS. 13-29) for blocking cable routing in the cable guides 200a, 200b so as to prevent a technician from misrouting the cables in the panel 100. The doors are removable as desired to unblock the openings for cables to go into and out of cable guides 200a, 200b. For example, the doors can be breakout or knock out style doors that can be snapped off, or can be inserted and retained by the cable guides 200a, 200b, and can be added or removed as desired. Benefits of the doors may include preventing improper routing around a sharp edge within panel 100. Another benefit may be to assist the technician with proper fiber routing.

Referring now to FIGS. 6-11, the first and second cable guides 200a, 200b each include a plurality of tabs 132 to manage the cables 130 inside the passageways defined by the first and second arcuate features 140a, 140b. Also, the first and second cable guides 200a, 200b include apertures 134 that are able to receive tabs from covers (not shown) attachable to the first and second cable guides 200a, 200b to protect the one or more cables 130 routed therein.

Additionally, the first and second cable guides 200a, 200b each include one or more slots 136 to fix one or more supports 138 (see FIG. 1). The supports 138 snap-fit into the slots 136 for attachment to the cable guides. The supports 138 extend from the first and second cable guides 200a, 200b at a 45 degree angle to support the trays 109 that pivot with respect to the groove plates 105. The supports 138 are made from a material able to support the weight of the trays 109. In one example, the supports 138 are made from aluminum or similar material.

FIG. 12 is a front view of an alternative example of a cable guide 200c. In this example, the cable guide 200c includes a first opening 206a, a second opening 206b, a third opening 206c, and a fourth opening 206d. The cable guide 200c can be used in examples where the panel 100 includes three columns of groove plates such that the cable guide 200c can be positioned relative to a middle column of groove plates, and the first opening 206a can receive and/or transfer cables to a first side of the middle column of groove plates and the second opening 206b can receive and/or transfer cables to a second side of the middle column of groove plates. The third opening 206c can receive and/or transfer cables to a cable guide corresponding to a first side column of groove plates, and the fourth opening 206d can receive and/or transfer cables to a cable guide corresponding to a second side column of groove plates.

As shown in FIG. 12, the cable guide 200c includes one or more arcuate features 140a that project from a base 142 of the cable guide to define cable passageways inside the cable guide 200c. In some examples, the first cable guide 200a includes only a one arcuate feature 140a. In some examples, the first cable guide 200a includes more than one arcuate feature 140a (such as two arcuate features 140a) that define the cable passageways. In the example illustrated in FIG. 12, the arcuate features 140a each have the same circular shape. In alternative examples, the arcuate features 140a can each have a different shape to define the cable passageways.

In another aspect, a method of routing cables inside a telecommunications closure includes routing a cable 130 from the first column 102 of groove plates to the second column 104 of groove plates. In one example, the first column 102 of groove plates 105 holds a plurality of trays for managing and splicing incoming cables such as feeder cables from a service provider while the second column 104 of groove plates 105 holds a plurality of trays for managing and splicing outgoing cables such as distribution cables routed to one or more subscriber locations.

The method includes routing the cable 130 though a first or second opening 202a, 202b of the first cable guide 200a. The method further includes routing the cable 130 around at least one arcuate feature 140a, 140b of the first cable guide 200a. The method further includes routing the cable 130 through a third opening 204a of the cable guide to the second column 104 of groove plates 105, the third opening 204a being orthogonal to the first and second openings 202a, 202b. In some examples, the method further includes routing the cable 130 to the second cable guide 200b before routing the cable 130 to the second column 104 of groove plates 105. In some examples, the method further includes routing the cable 130 around at least one arcuate feature 140a, 140b of the second cable guide 200b, and routing the cable 130 to a first or second opening 202c, 202d of the second cable guide 200b. In one example, the cable 130 is routed to the first opening 202c of the second cable guide 200b to reach a first side of the second column 104 of groove plates 105. In another example, the cable 130 is routed to the second opening 202d of the second cable guide 200b to reach a second side of the second column 104 of groove plates.

Referring now to FIGS. 13-15, a panel 300 of a telecommunications closure is shown similar in some respects to panel 100 noted above. The panel 300 is typically contained within a closure that houses fiber optic equipment in a telecommunications network. The back panel and other panel portions of the closure are not shown in FIGS. 13-15. The panel 300 can be mounted in a variety of vertical and horizontal positions. Cables enter and exit the panel 300 and are managed by the various structures associated with panel 300.

In the example panel 300, the panel 300 includes first and second columns 302, 304 of groove plates 105, similar to the first and second columns 102, 104 of groove plates 105 noted above. The groove plates 105 hold a plurality of trays (not shown) similar to trays 109 noted above. Each tray is pivotable with respect to the groove plates 105. Each tray can be used to manage optical fibers and store splices. The plurality of trays on the groove plates 105 can include splice trays, splitter trays, wave division multiplexer trays, storage trays, and the like.

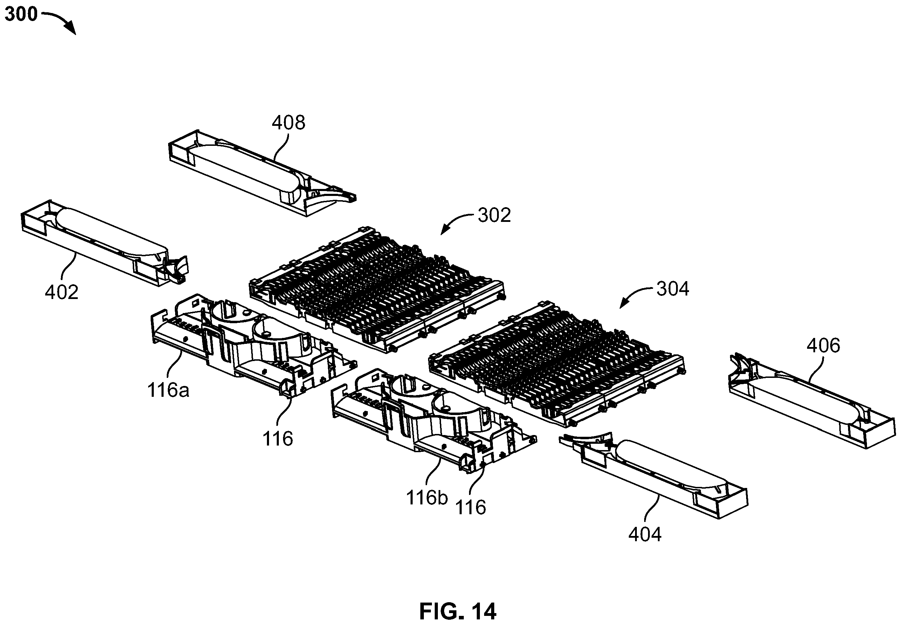

Cable managers 116 guide cables toward and away from the first and second columns 302, 304 of groove plates 105. As shown in FIG. 14, the panel 300 includes a first cable manager 116a below the first column 302 of groove plates, and a second cable manager 116b below the second column 304 of groove plates. Alternative arrangements are possible.

As shown in FIGS. 13 and 14, panel 300 includes a plurality of cable guides 400. In the example shown, four cable guides 400 are shown, one cable guide 400 on each end of each column 302, 304 of groove plates. Cable guides 402, 404 are mirrored parts and share the same features. Cable guides 406, 408 are identical to cable guides 402, 404, respectively. The cable guides 402-408 provide a smooth transition for cables being managed by the one or more columns of groove plates to the cable managers 116 or other cable guides 402-408.

The cable guides 402, 404 are positioned between the first and second columns 302, 304 of groove plates and the cable managers 116a, 116b, respectively. The cable guides 406, 408 are positioned on opposite ends of the first and second columns 304, 302, respectively.

Referring now to FIG. 16, the cable guide 402 is shown. The cable guide 402 is identical to the cable guide 406, and is a mirror image of the cable guides 404, 408. As shown, the cable guide 402 has four openings 420, 422, 424, and 426. The openings 420, 422, 424 are shown with covers or doors 430 in place. The doors 430 are removable as desired to unblock the openings for cables to go into and out of cable guide 402. The doors 430 can be breakout or knock out style doors that can be snapped off. Alternatively, the doors 430 can be inserted and retained by a body 432 of cable guide 402, and can be added or removed as desired. In some examples, the doors 430 can also be included in the cable guides 200a, 200b described above.

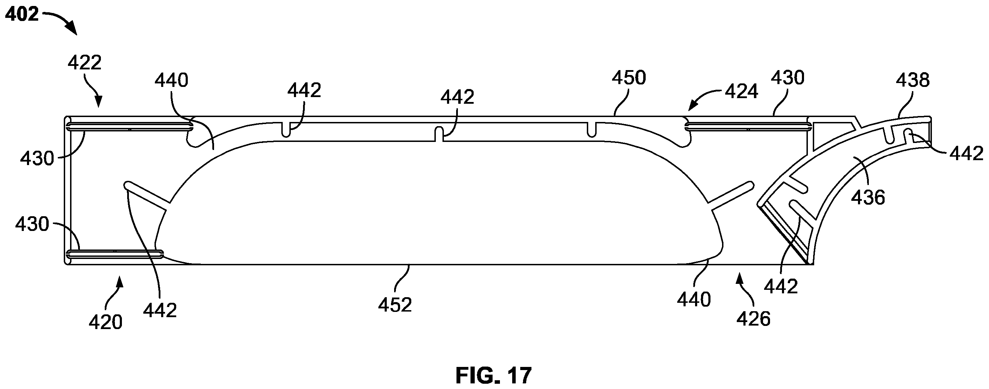

As shown in FIGS. 16 and 17, the cable guide 402 includes an arcuate pathway 436 formed by a projection 438 for cables entering and exiting the cable guide 402 from a minor side 434 of the cable guide 402. The minor side 434 is orthogonal to major sides 450, 452.

With reference to FIGS. 16-23, further features of cable guide 402 are shown. The cable guide 402 can include an internal arcuate passageway 440 and retention fingers or tabs 442 internal to the body of cable guide 402 to retain cables inside the internal arcuate passageway 440. The arcuate pathway 436 also includes cable retention fingers or tabs 442.

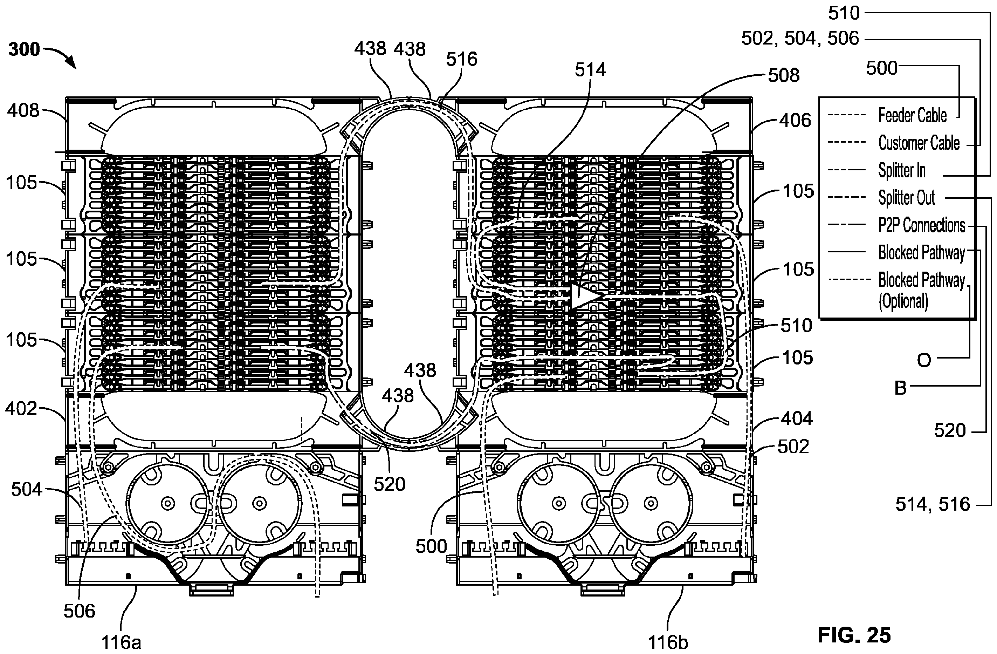

Referring now to FIGS. 25-29, various cable routing pathways can be defined by panel 300. As noted above, the pivoting trays communicate with cable routing pathways on the columns 302, 304 of groove plates. A feeder cable 500 enters through cable manager 116b and can be spliced to a point-to-point fiber 520 or a splitter input fiber 510. The feeder cable 500 can be a multi-fiber cable wherein different splices can connect to the point-to-point fiber 520 or the splitter input fiber 510. Alternatively, the point-to-point fiber 520 and splitter input fiber 510 can be multi-fiber cables themselves which can be mass fusion spliced to feeder cable 500. A splitter 508 includes two example splitter output fibers 514, 516 which are routed to two different columns, 302, 304 of groove plates. In the case of the splitter output fibers 514, 516 and the point-to-point fiber 520, the fibers are spliced to different customer cables 502, 504, 506 which exit the panel 300 through one of the cable managers 116a, 116b.

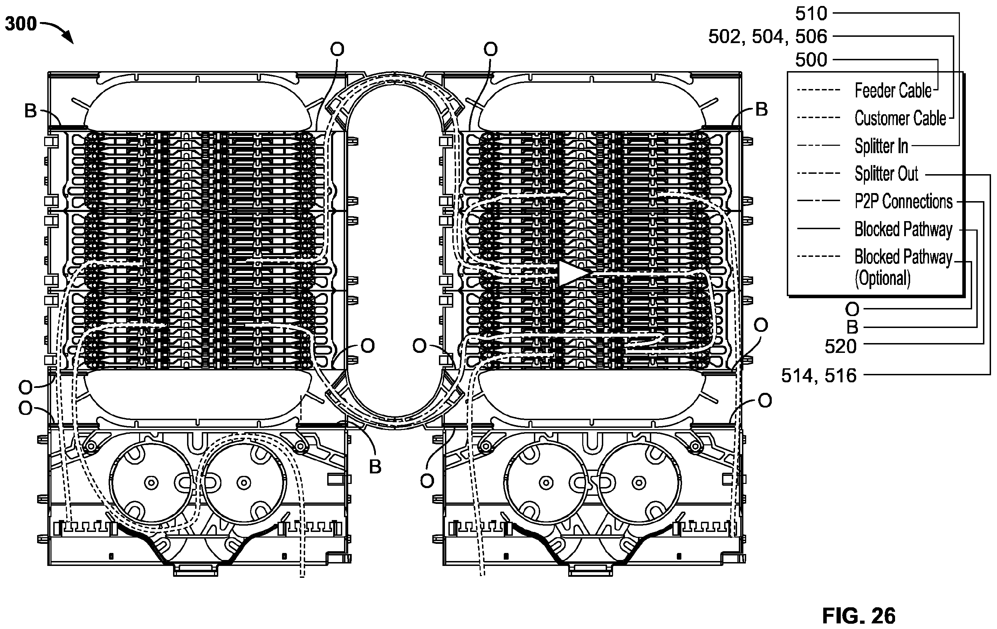

As shown, panel 300 includes various open passageways in cable guides 402, 404, 406, and 408. In addition, various blockers (i.e., the doors 430) are illustrated for blocking cable routing so as to prevent a technician from misrouting the cables in the panel 300. One benefit of the blocker or door feature may be to prevent improper routing around a sharp edge within panel 300. Another benefit may be to assist the technician with proper fiber routing. In the example shown in FIG. 26, open passages are labeled O, and blocked or closed passages are labeled B. The panel 300 is just one example of an arrangement for the cables, trays, and columns. Other variations and combinations are possible.

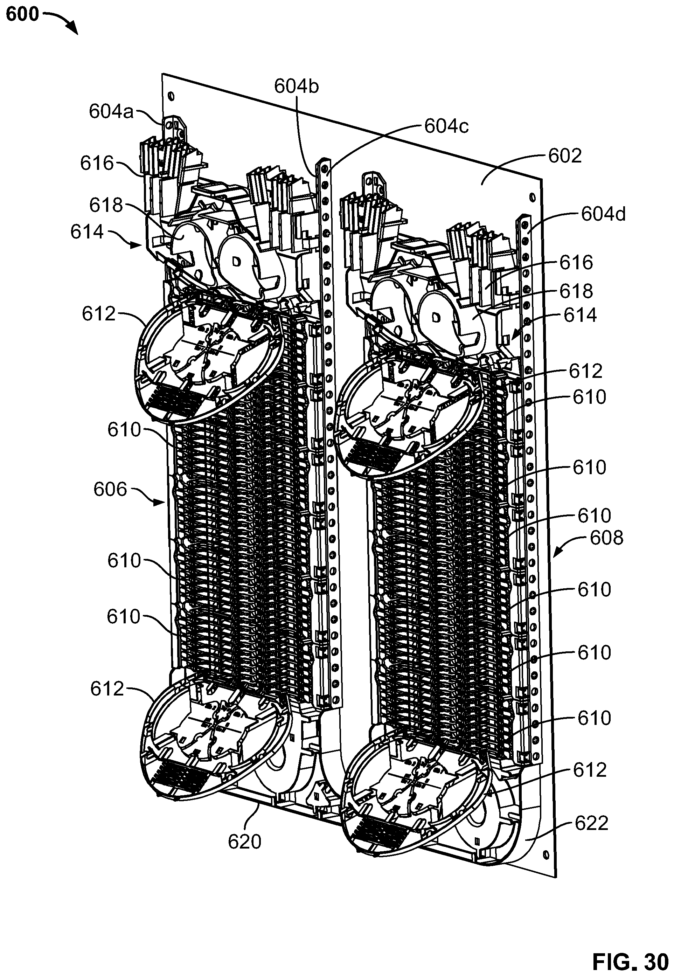

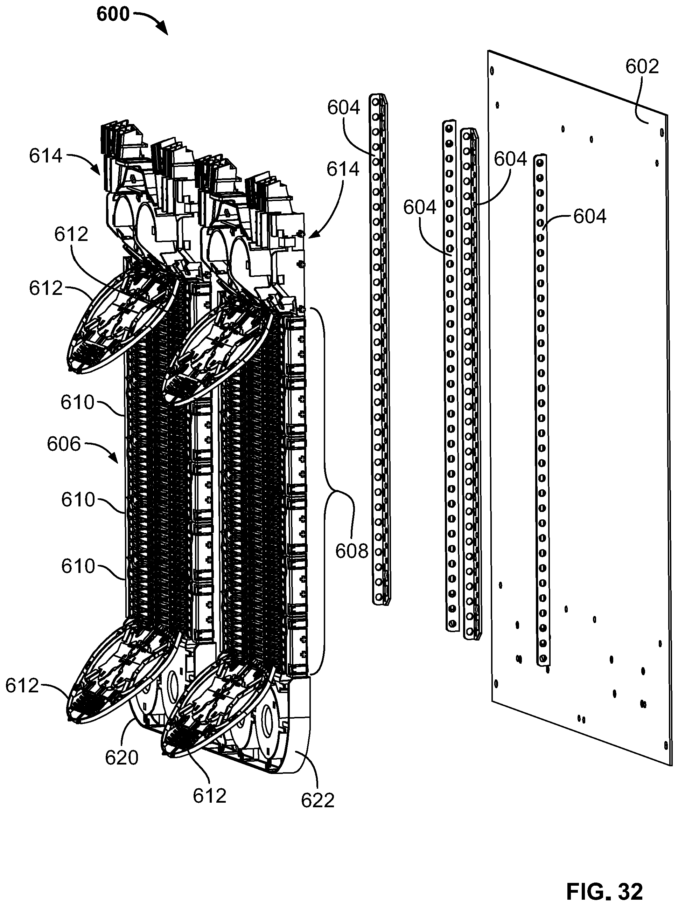

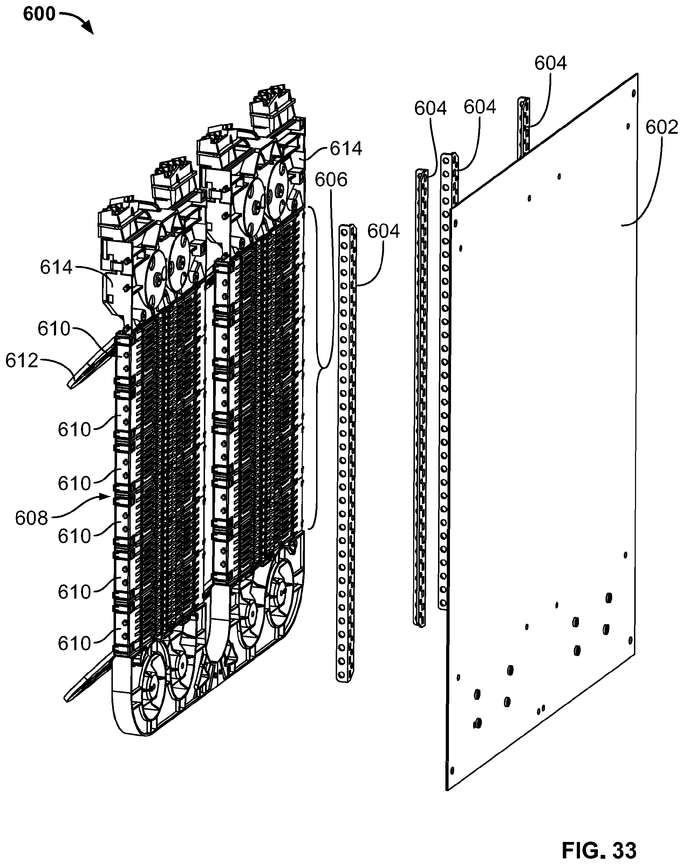

FIGS. 30-33 are front isometric, side, exploded front isometric, and exploded rear isometric views, respectively, of a panel 600 for a telecommunications closure. The panel 600 as shown is similar in some respects to panel 100 noted above. The panel 600 is typically part of a closure that houses fiber optic equipment in a telecommunications network. The other panel portions of the closure are not shown in FIGS. 30-33. The panel 600 can be mounted in a variety of vertical and horizontal positions. Cables enter and exit the panel 600 and are managed by the various structures associated with panel 600.

The panel 600 includes a back plate 602 and rails 604a-604d mounted thereto. The rails 604 are substantially L shaped and have a plurality of holes for receiving fasteners such as screws, threaded bolts, and the like. A first side of each rail 604 is fixed to the back plate 602 while an orthogonal, second side of each rail 604 projects from the back plate 602 when the rails 604 are fixed to the back plate 602. The rails 604 can be fixed to the back plate 602 by one or more fasteners that are passed through the holes on the rails 604 and through corresponding holes on the back plate 602. In some examples, the fasteners are threaded bolts such that a nut can be secured to the end of each threaded bolt after it has passed through the corresponding holes on the rails 604 and back plate 602 to secure the rails 604 to the back plate 602.

The panel 600 further includes one or more columns of groove plates. In the illustrated example, the panel 600 includes first and second columns 606, 608 of groove plates 610 that are similar to the first and second columns 102, 104 of groove plates 105 described above. The groove plates 610 are attached to the panel 600 between the rails 604. For example, the groove plates 610 in the first column 606 are fixed between rails 604a and 604b while the groove plates 610 in the second column 608 are fixed between rails 604c and 604d. In some examples, the groove plates 610 are secured to the rails 604 using one or more fasteners such as screws for attachment to the panel 600. In other examples, the groove plates 610 are snap-fitted between the rails 604 for attachment to the panel 600. Alternatively, the groove plates 610 can be attached directly to the back plate 602 without attachment to the rails 604 by one or more fasteners that attach the groove plates 610 directly to the back plate 602. The groove plates 610 are detachably mounted to the panel 600 such that the groove plates 610 as well as other components can be rearranged on the panel 600.

The groove plates 610 each hold a plurality of trays 612 that are similar to the trays 109 described above (only a few trays 612 being shown in FIGS. 30-33). The trays 612 are pivotable with respect to the groove plates 610. Each tray 612 can be used to manage optical fibers and store splices. The plurality of trays 612 on the groove plates 610 can include splice trays, splitter trays, wave division multiplexer trays, storage trays, and the like.

The panel further includes cable managers 614 that can be mounted to the rails 604 of the panel 600. Alternatively, the cable managers 614 can be attached directly to the back plate 602. The cable managers 614 are detachably mounted to the panel 600 such that the cable managers 614 can be rearranged to modify the configuration of the panel 600.

Each cable manager 614 includes grooves 616 to guide cables toward and away from the first and second columns of groove plates. In the illustrated examples, a cable manager 614 is position above the first column 606 of groove plates, and another cable manager 614 is positioned above the second column 608 of groove plates. Alternative arrangements are possible.

Each cable manager 614 includes one or more spools 618. The spools 618 can be used to route cables between opposite sides (e.g., left and right sides) of a column of groove plates. Also, the spools 618 can be used to change the direction of the cables. In some examples, excess cable can be looped around the spools 618 for storage.

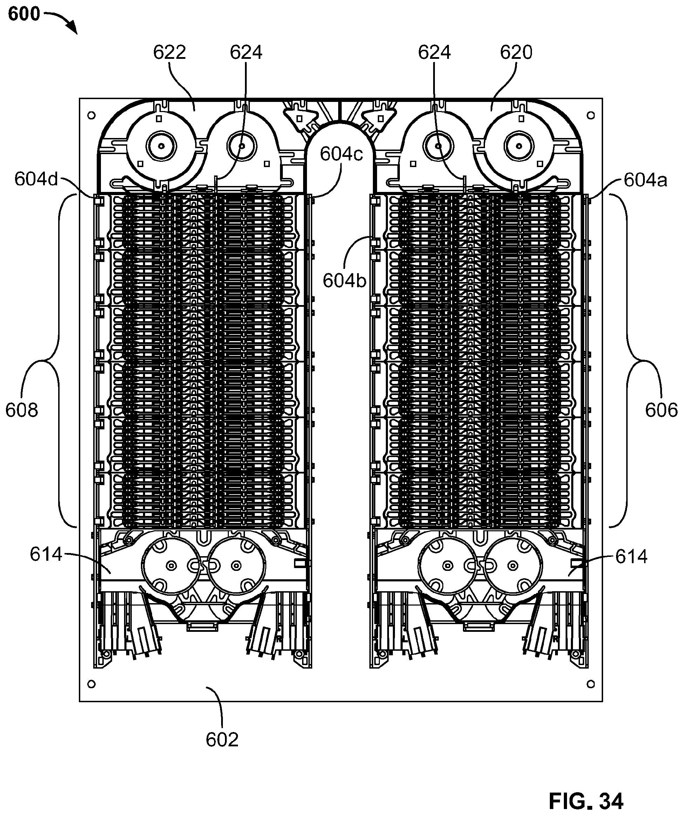

FIG. 34 shows the panel 600 inverted upside down (i.e., rotated 180 degrees) with respect to the orientation shown in FIGS. 30-33. As shown in FIG. 34, the cable managers 614 are positioned toward the bottom of the panel 600 such that the cable managers 614 are positioned below the first and second columns 606, 608 of groove plates 610.

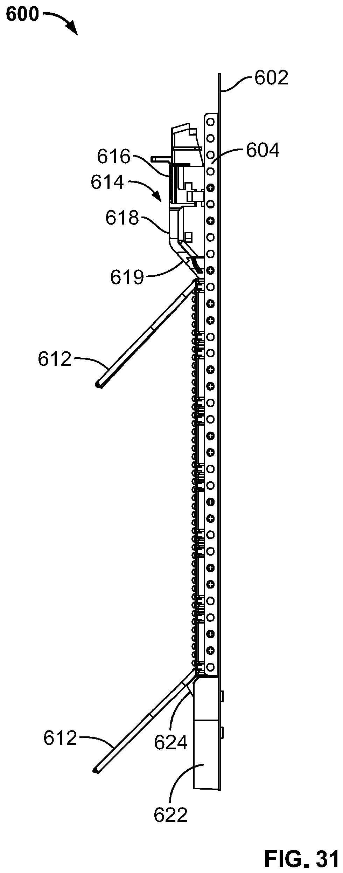

Referring now to FIGS. 30-34, the spools 618 support the trays 612 when the cable managers 614 are located towards the bottom of the panel 600. When inverted upside down, the trays 612 are pivoted about the groove plates 610 in a direction towards the cable managers 614 by gravity. The spools 618 each have an angled surface 619 (see FIG. 31) running along a length of each spool 618. The angled surface 619 of each spool 618 can support the trays 612 when the trays 612 are pivoted toward the cable managers 614. In some examples, the angled surface 619 supports the trays 612 in a substantially 45 degree angle. In some examples, a cover (such as the one shown in FIG. 1) is attached to the cable managers 614 and thereby covers the spools 618 such that the cover contacts the trays 612 when the trays 612 are supported by the spools 618.

The panel 600 includes cable guides 620, 622, similar to the cable guides 200a, 200b described above. In the example shown, two cable guides 620, 622 are shown, with a first cable guide 620 at the end of the first column 606 of groove plates 610 and a second cable guide 622 at the end of the second column 608 of groove plates 610. Cable guides 620, 622 are mirrored parts and share the same features. The cable guides 620, 622 provide a smooth transition for cables being managed by the one or more columns of groove plates on the panel 600.

The cable guides 620, 622 include an angled projection 624 (see FIG. 31) that supports the trays 612 when the trays 612 are pivoted toward the cable guides 620, 622. In some examples, the angled projection 624 supports the trays 612 in a substantially 45 degree angle.

The cable guides 620, 622 are detachably mounted to the panel 600 such that the cable guides 620, 622 can be rearranged on the panel 600. Thus, the configuration of the cable guides 620, 622, cable managers 614, and groove plates 610 can be rearranged on the panel 600 in the field, as needed. For example, the cable guides 620, 622 are shown located towards the bottom of the panel 600 in FIGS. 30-33, however, in other examples the cable guides 620, 622 can be located towards the top of the panel 600 as shown in FIG. 34.

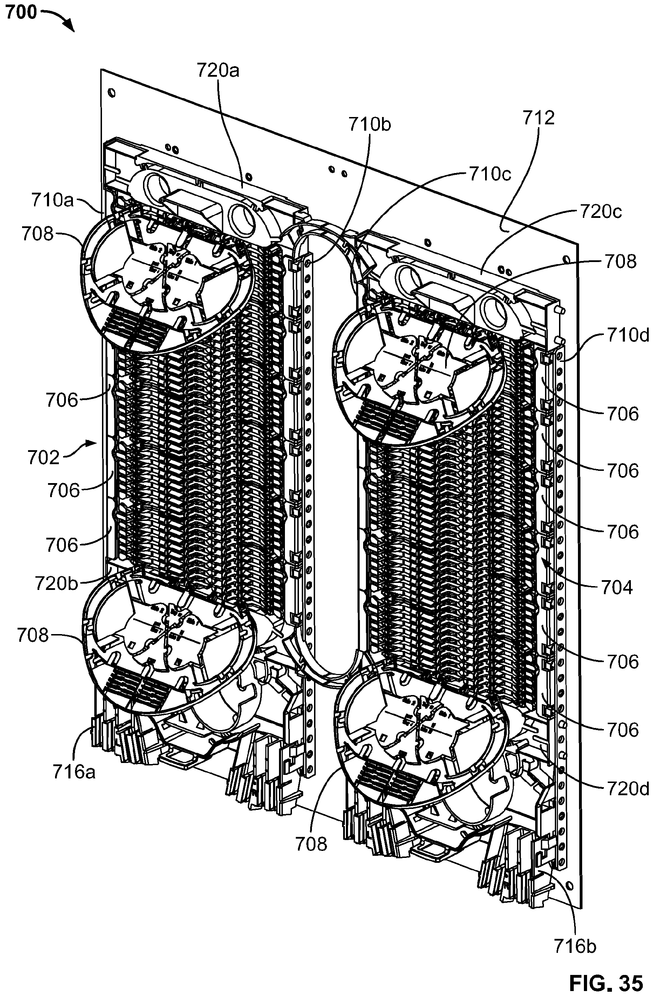

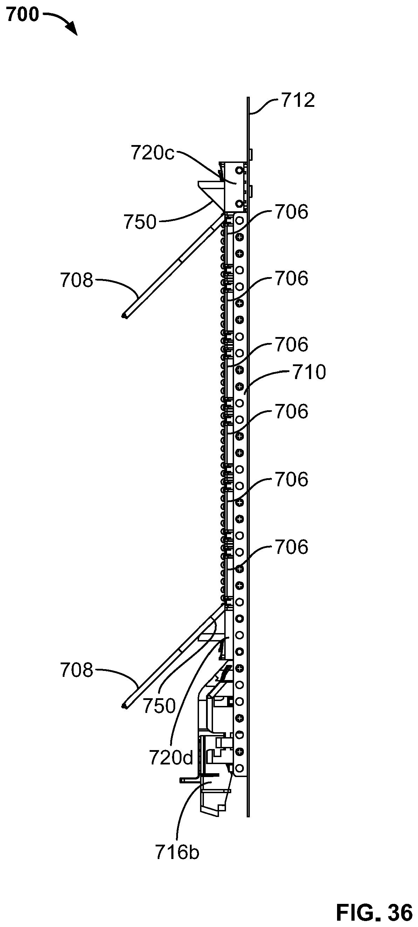

FIGS. 35 and 36 are front isometric and side views, respectively, of a panel 700 for a telecommunications closure. The panel 700 as shown is similar in some respects to panel 300 noted above. The panel 700 is typically part of a closure that houses fiber optic equipment in a telecommunications network. The other panel portions of the closure are not shown in FIGS. 35 and 36. The panel 700 can be mounted in a variety of vertical and horizontal positions. Cables enter and exit the panel 700 and are managed by the various structures associated with panel 700.

The panel 700 includes first and second columns 702, 704 of groove plates 706, similar to the first and second columns 102, 104 of groove plates 105 noted above. The groove plates 706 hold a plurality of trays 708 similar to trays 109 noted above. Each tray is pivotable with respect to the groove plates 706. Each tray 708 can be used to manage optical fibers and store splices. The plurality of trays 708 on the groove plates 706 can include splice trays, splitter trays, wave division multiplexer trays, storage trays, and the like.

The groove plates 706 are attached to the panel 700 between rails 710a-710d that are substantially similar to the rails 604a-604d described above with respect to FIGS. 30-34. For example, the groove plates 706 in the first column 702 are fixed between rails 710a and 710b while the groove plates 706 in the second column 704 are fixed between rails 710c and 710d. In some examples, the groove plates 706 are secured to the rails 710 using one or more fasteners such as screws for attachment to the panel 700. In other examples, the groove plates 706 are snap-fitted between the rails 710 for attachment to the panel 700. Alternatively, the groove plates 706 can be attached directly to a back plate 712 without attachment to the rails 710. The groove plates 706 are detachably mounted to the panel 700 such that the groove plates 706 as well as the other components of the panel 700 can be rearranged on the panel 700.

Cable managers 716a, 716b guide cables toward and away from the first and second columns 702, 704 of groove plates 706. The panel 700 includes a first cable manager 716a below the first column 702 of groove plates, and a second cable manager 716b below the second column 704 of groove plates. Alternative arrangements are possible.

The cable managers 716a, 716b can be mounted to the rails 710 of the panel 700. Alternatively, the cable managers 716a, 716b can be attached directly to the back plate 712. The cable managers 716a, 716b are detachably mounted to the panel 700 such that the cable managers 716a, 716b can be rearranged on the panel 700.

The panel 700 has a plurality of cable guides 720a-720d. In the illustrated example, four cable guides 720a-720d are shown. Each cable guide 720a-720d is positioned at an end of each column 702, 704 of groove plates 706. Alternative configurations are contemplated.

The cable guides 720a, 720b are mirrored parts and share the same features. Cable guides 720c, 720d are identical to cable guides 720a, 720b, respectively. The cable guides 720 provide a smooth transition for cables and fibers between the columns of groove plates, cable managers, and other cable guides mounted onto the panel 600.

The cable guides 720 can be mounted to the rails 710 of the panel 700. Alternatively, the cable guides 720 can be attached directly to the back plate 712. The cable guides 720 are detachably mounted to the panel 700 such that the cable guides 720 can be rearranged on the panel 700, and thereby the configuration of the cable guides 720, cable managers 716a, 716b, and groove plates 706 can be rearranged on the panel 700, as needed in the field.

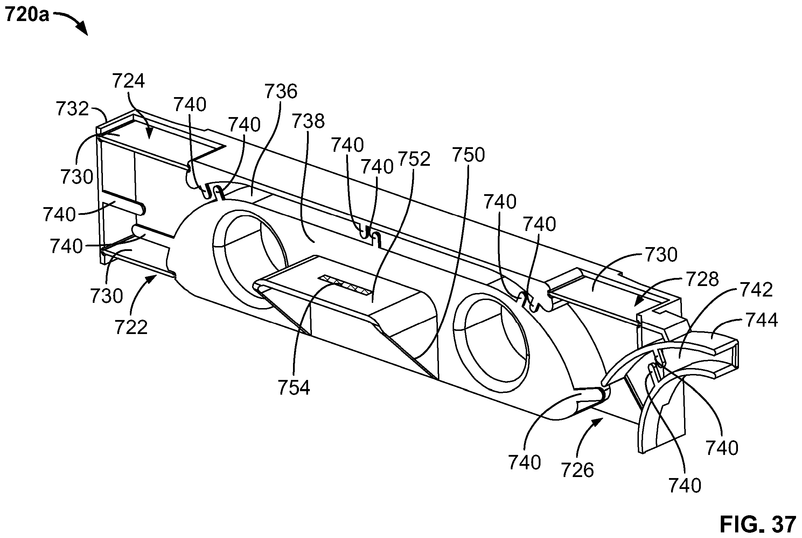

FIGS. 37-39 are front isometric, front, and top views, respectively, of the cable guide 720a. The cable guide 720a is identical to the cable guide 720d, and is a mirror image of the cable guides 720b, 720c. As shown in FIGS. 37-39, the cable guide 720a has four openings 722, 724, 726, and 728. The openings 722, 724, 728 are shown with doors 730 in place. The doors 730 are substantially similar to the doors 430 described above with reference to FIGS. 16 and 17. The doors 730 are removable as desired to unblock the openings for cables to go into and out of cable guide 720a. The doors 730 can be breakout or knock out style doors that can be snapped off. Alternatively, the doors 730 can be inserted and retained by a body 732 of cable guide 720a, and can be added or removed from the body 732 as desired.

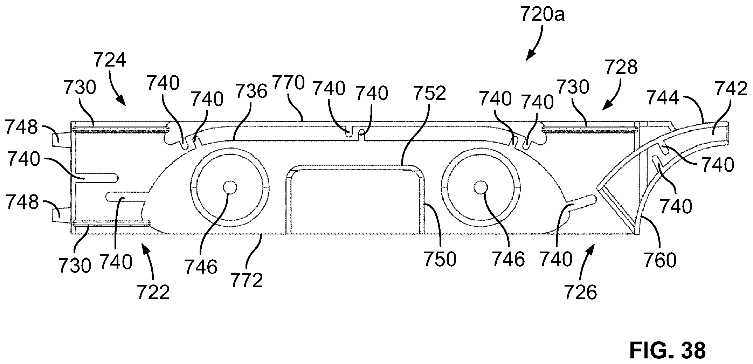

The cable guide 720a has an internal arcuate passageway 736 defined by an arcuate structure 738. Retention fingers or tabs 740 retain cables inside the internal arcuate passageway 736. The cable guide 720a also has an arcuate pathway 742 formed by a projection 744 for cables entering and exiting the cable guide 720a from a minor side 760 of the cable guide 720a. As shown in FIG. 38, the minor side 760 is orthogonal to major sides 770, 772. The arcuate pathway 742 has cable retention fingers or tabs 740 to retain cables therein.

As shown in FIG. 38, the cable guide 720a can include holes 746 each configured for receiving a fastener such as a screw, threaded bolt, and the like for securing the cable guide 720a to the back plate 712. The cable guide 720a can also include pegs 748 that can be received by the holes in the rails 710 for securing at least one side of the cable guide 720a to a rail 710.

The cable guide 720a further includes an angled surface 750 that projects from the body 732, and that terminates at a planar surface 752 substantially orthogonal to the body 732. The angled surface 750 is configured to support the trays 708 when the trays 708 are pivoted in a direction toward cable guide 720a (see, for example, cable guides 720b, 720d supporting the trays 708 in FIGS. 35 and 36). In some examples, the angled surface 750 supports the trays 708 in a substantially 45 degree angle. In some examples, the planar surface 752 has a slot 754 for attaching a long strap to hold the trays 708 down when the trays 708 are not being accessed. In some examples, the long strap is made from Velcro.

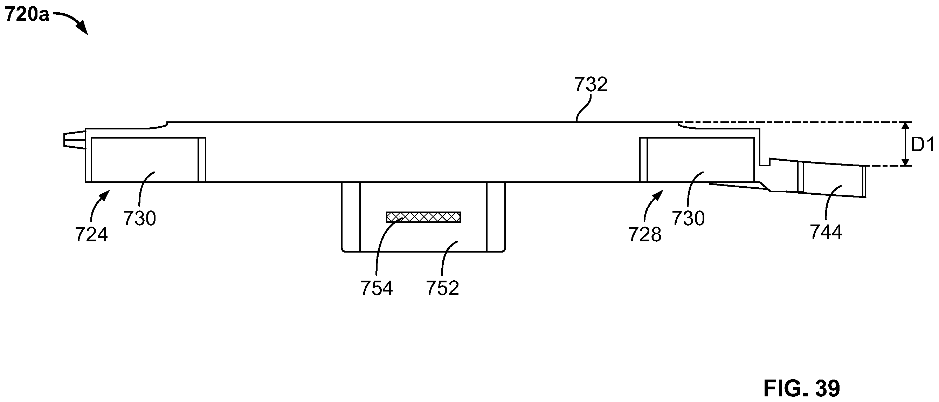

Referring now to FIG. 39, the projection 744 that forms the arcuate pathway 742 is elevated with respect to the remainder of the body 732 by a distance D1 such that the projection 744 can pass over the rails 710, and hence the arcuate pathway 742 is not obstructed by the rails 710 when the cable guide 720a is mounted to the rails 710. For example, FIGS. 35 and 36 show the cable guides 720b, 720d mounted to the rails 710 such that the arcuate pathways 742 in the cable guides 720b, 720d are operatively connected without obstruction from the rails 710 for providing a smooth transition between the first and second columns 702, 704 of groove plates.

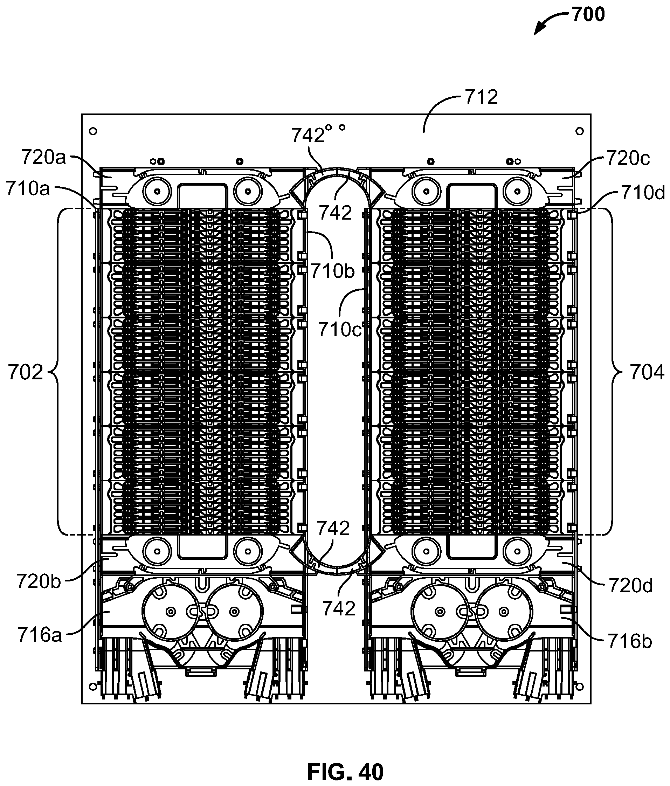

FIG. 40 is a front view of the panel 700. Referring now to FIG. 40, the respective arcuate pathways 742 in cable guides 720a and 720c are operatively connected to provide a smooth transition between the first and second columns 702, 704 of groove plates, while the respective arcuate pathways 742 in cable guides 720b and 720d are operatively connected to provide a smooth transition between the first and second columns 702, 704. As described above, the projection 744 in each cable guide 720a-720d is elevated with respect to the remainder of the body 732 such that the arcuate pathway 742 is not obstructed by the rails 710a-710d.

In the example illustrated in FIG. 40, the groove plates 706, cable guides 720b and 720d, and cable managers 716a, 716b are mounted to the rails 710a-710d. However, cable guides 720a and 720c are not mounted to the rails. Instead, cable guides 720a and 720c are mounted directly to the back plate 712. The cable guides 720b, 720d are positioned between the columns 702, 704 of groove plates and the cable managers 716a, 716b, respectively. The cable guides 720a, 720c are positioned on opposite ends of the columns 702, 704, respectively.

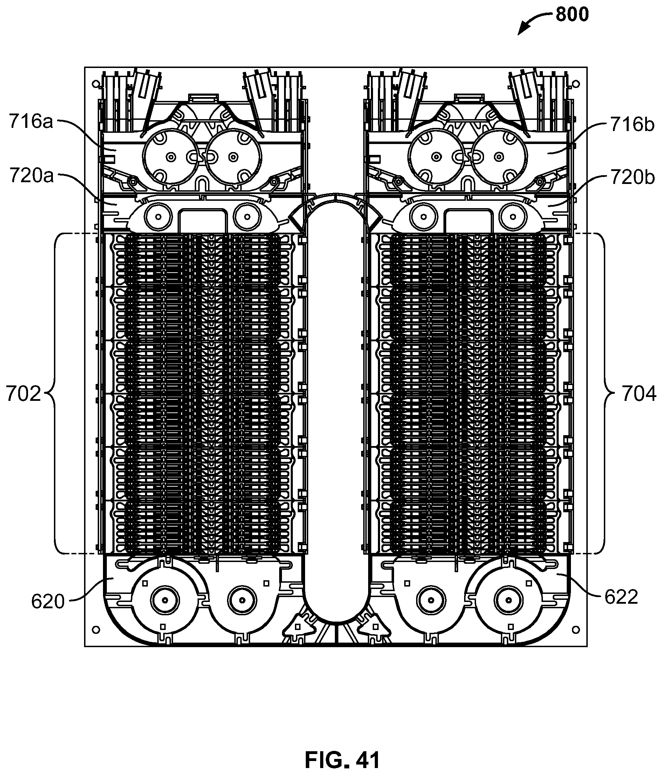

FIG. 41 is a front view of an alternative configuration for a panel 800 for a telecommunications closure. As shown in FIG. 41, the panel 800 includes a combination of the cable guides 620, 622 (described above with respect to FIGS. 30-34) and the cable guides 720a-720d (described above with respect to FIGS. 35-40). In the illustrative example of FIG. 41, cable guides 720a, 720b are positioned between the columns 702, 704 of groove plates and the cable managers 716a, 716b, respectively, while cable guides 620, 622 are positioned on opposite ends of the columns 702, 704, respectively. Also, the cable managers 716a, 716b are positioned above the columns 702, 704 of groove plates, while the cable guides 620, 622 are positioned below the columns 702, 704 of groove plates. Alternative configurations for the placement of the cable guides 620, 622, 720a, and 720b on the panel 800 are possible because, as described above, the cable guides 620, 622, 720a-720d, cable managers 716a, 716b, and groove plates are detachably mounted to the panel 800 such that the cable guides 620, 622, 720a-720d, cable managers 716a, 716b, and groove plates can be rearranged on the panel 800, as needed in the field. The rearrangement of the cable guides 620, 622, 720a-720d, cable managers 716a, 716b, and groove plates typically occurs before any cables or fibers are routed in these structures.

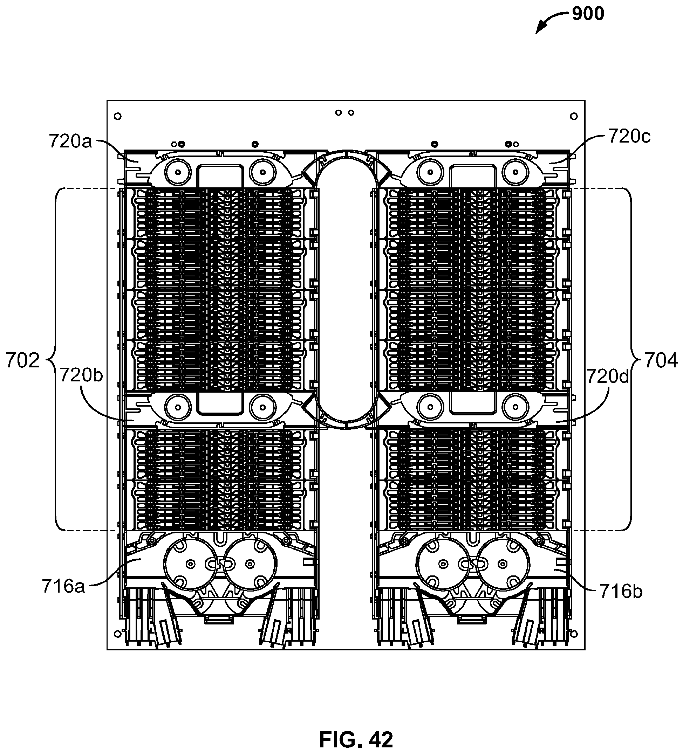

FIG. 42 is a front view of another alternative configuration for a panel 900 for a telecommunications closure. As shown in FIG. 42, the panel 900 has a plurality of cable guides 720a-720d. In the illustrated example, the cable guides 720a, 720c are positioned at the ends of the columns 702, 704 of groove plates, respectively, while the cable managers 716a, 716b are positioned at opposite ends of the columns 702, 704, respectively. The cable guides 720b, 720d are positioned at intermediate positions in the columns 702, 704 of groove plates, respectively.

Enabling the cable guides 620, 622, 720a-720d, cable managers 716a, 716b, and groove plates to be rearranged on the panel 800 enhances the flexibility and versatility of the panel. For example, the cable guides 620, 622 may allow for more fiber routing options in some embodiments by providing more access to the vertical channels in the groove plates. Alternatively, the cable guides 720a-720d, with one or more openings blocked by doors 730, can help less experienced technicians by providing fewer fiber routing options so that the fibers do not get misrouted. Thus, by combining both types of cable guides 620, 622, 720a-720d on a single panel, or by reconfiguring a panel from utilizing one type of cable guide to utilizing another type of cable guide, the flexibility and versatility of the system is enhanced.

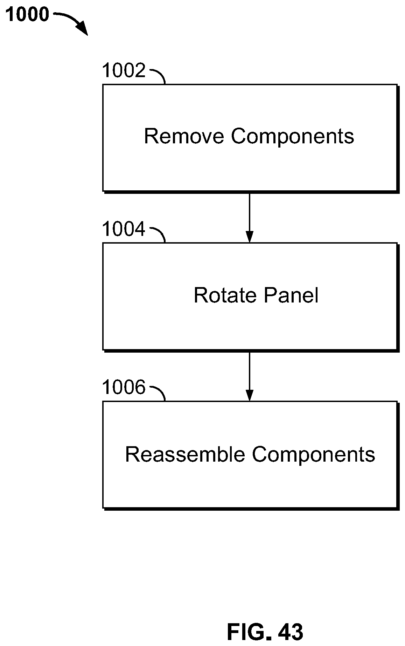

FIG. 43 illustrates a method 1000 for assembling a panel for a telecommunications closure. The method 1000 can be performed to reconfigure the panel 600 of FIG. 30 into the panel 700 of FIG. 35. Alternatively, the method 1000 can be performed to reconfigure the panel 700 of FIG. 35 into the panel 600 of FIG. 30. Additionally, it is contemplated that the method 1000 can be performed to reconfigure the panel 700 of FIG. 40 into one of the panels 800, 900 shown in FIGS. 41 and 42, respectively, or to reconfigure one of the panels 800, 900 shown in FIGS. 41 and 42, respectively, into the panel 700 of FIG. 40. Additional reconfigurations between the various panels that are described above and shown in the figures are contemplated.

The method 1000 includes an operation 1002 of removing one or more components from the panel, an operation 1004 of rotating the panel, and an operation 1006 of reassembling one or more components onto the panel. Preferably, the method 1000 is performed before the various cables and fibers are routed through the components on the panel.

With respect to operation 1002, various components such as cable guides 620, 622, 720a-720d, cable managers 716a, 716b, and groove plates 105, 610, 706 are removed from a back plate of the panel. As described above, these components can be detachably mounted to the rails 604, 710 of the panel or can be detachably mounted directly to the back plate of the panel using one or more types of fasteners or snap-fit connections.

**In** some examples, operation 1002 is optional. For example, when the panel is being installed for the first time in the field, there are no components for removal from the back plate.

With respect to operation 1004, the back plate is rotated 180 degrees. In some examples, the back plate is rotated to provide room at the top or bottom portions of the back plate to accommodate the various components that are reassembled during operation 1006. In some examples, operation 1004 is optional such that the back plate is not rotated.

With respect to operation 1006, various components such as cable guides 620, 622, 720a-720d, cable managers 716a, 716b, and groove plates 105, 610, 706 are detachably mounted to the panel. In some examples, new components that were not previously mounted on the panel are added, while components that were previously mounted on the panel are not added. As an illustrative example, in an example where the panel 600 of FIG. 30 is reconfigured into the panel 700 of FIG. 35, the cables guides 620, 622 are removed at operation 1002 and are not added back in operation 1006. Instead, the cable guides 720a-720d which were not previously mounted on the panel, are added in operation 1006. Thus, the method 1000 can be performed to reconfigure the various panels described above to enhance the flexibility and customization of the panels.

The various embodiments described above are provided by way of illustration only and should not be construed to limit the claims attached hereto. Those skilled in the art will readily recognize various modifications and changes that may be made without following the example embodiments and application illustrated and described herein, and without departing from the scope of the following claims.

## Claims

1. A cable guide (200a, 200b, 200c, 402, 404, 406, 408, 620, 622, 720a, 720b, 720c, 720d) for a telecommunications closure comprising at least two columns of groove plates, the cable guide comprising:
a first opening (202a) on a first side (201) for receiving one or more cables (130) from a first side (A) of a first column (102) of groove plates;
a second opening (202b) opposite the first opening on the first side for receiving the one or more cables from a second side (B) of the first column of groove plates;
a third opening (204a) on a second side (203), the second side being orthogonal to the first side, the first, second, and third openings being positioned on a common plane for transferring the one or more cables from the first and second sides (A, B) of the first column (102) of groove plates to a second column (104) of groove plates; and
at least one arcuate feature (140a, 140b) projecting from a base (142) of the cable guide and defining a plurality of cable passageways between the first, second, and third openings, and
**characterized in that**
the first and second openings (202a, 202b) on the first side (201) face in a same direction, and the third opening (204a) on the second side (203) faces in an orthogonal direction.

2. The cable guide of claim 1, further comprising a projection (207) on the second side, and wherein the third opening (204a) is at a distal end of the projection.

3. The cable guide of claim 2, wherein the projection (207) extends in a direction parallel to the first side (201), and a transition (209) between the second side (203) and the projection (207) is curved.

4. The cable guide of claims 1, 2, or 3, further comprising a first arcuate feature (140a) proximate the first opening (202a), and a second arcuate (140b) feature proximate the second opening (202b), wherein a passageway is defined between the first and second arcuate features.

5. The cable guide as in any one of the preceding claims, further comprising a support (138) extending from the cable guide, and structured to support a plurality of pivotable trays.

6. The cable guide as in any one of the preceding claims, further comprising a plurality of tabs (132) to manage cables inside the plurality of cable passageways.

7. The cable guide as in any of the preceding claims, further comprising a fourth opening (206d) on a third side (205), the third side being orthogonal to the first side (201) and parallel to the second side (203).

8. The cable guide of claim 7, wherein the cable guide is structured to transfer the one or more cables from a middle column of groove plates having a plurality of pivotable trays to a first side column and a second side column of groove plates each having a plurality of pivotable trays.

9. A telecommunications closure comprising the cable guide of any one of claims 1-6, the telecommunications closure further comprising:
a panel (100);
the first column (102) of groove plates attached to the panel, the first column of groove plates having a plurality of pivotable trays (109);
wherein the cable guide is a first cable guide (200a, 620) located at the end of the first column of groove plates and structured to transfer one or more cables from the first column of groove plates; and the second column (104) of groove plates attached to the panel, the second column of groove plates having a plurality of pivotable trays, and the cable guide being structured to transfer one or more cables from the first column of groove plates to the second column of groove plates, and to receive one or more cables from the second column of groove plates.

10. The telecommunications closure of claim 9, further comprising a second cable guide (200b) located at an end of the second column (104) of groove plates, wherein the first and second cable guides (200b) are mirrored parts each comprising a projection (207), and wherein the projections abut one another on the panel (100) for transferring and receiving the one or more cables (130) through the third opening (204a, 204b) of each of the first and second cable guides.

11. The telecommunications closure of claim 10, further comprising a third cable guide (200c) structured to transfer one or more cables between a middle column of groove plates and the first and second columns of groove plates.

12. A method of routing cables inside the telecommunications closure of claim 10, the method comprising:
routing a cable from the first column (102) of groove plates though the first or second opening (202a, 202b) of the first cable guide (200a);
routing the cable around the at least one arcuate feature (140a) of the first cable guide;
routing the cable through the third opening (204a) of the first cable guide to the second column (104) of groove plates, the third opening being orthogonal to the first and second openings; routing the cable to a second cable guide (200b) before routing the cable to the second column of groove plates; routing the cable around at least one arcuate feature (140a) of the second cable guide; and
routing the cable to a first or second opening of the second cable guide.

13. The telecommunications closure of any one of claims 9-11, wherein at least one of the openings of the cable guides is capable of being blocked or closed.

14. The telecommunications closure of any one of claims 9-11, wherein an arcuate internal pathway is provided by the cable guides extending from one side of the cable guides to an opposite side, and wherein one of the sides includes an arcuate exit pathway.

15. The telecommunications closure of claim 9, wherein at least two columns of groove plates (302, 304) are provided for holding a plurality of pivotally mounted trays, four cable guides (402, 404, 406, 408) are provided on opposite ends of each of the two columns, and each column includes at least one cable manager for managing incoming and outgoing fibers.

## Patentansprüche

1. Kabelführung (200a, 200b, 200c, 402, 404, 406, 408, 620, 622, 720a, 720b, 720c, 720d) für eine Telekommunikationsabschlussvorrichtung, wobei die Kabelführung Folgendes umfasst:
eine erste Öffnung (202a) auf einer ersten Seite (201) zum Aufnehmen eines oder mehrerer Kabel (130) von einer ersten Seite (A) einer ersten Säule (102) von Nutenplatten;
eine zweite Öffnung (202b) gegenüber der ersten Öffnung auf der ersten Seite zum Aufnehmen des einen oder der mehreren Kabel von einer zweiten Seite (B) der ersten Säule von Nutenplatten;
eine dritte Öffnung (204a) auf einer zweiten Seite (203), wobei die zweite Seite orthogonal zu der ersten Seite ist, wobei die erste, die zweite und die dritte Öffnung auf einer gemeinsamen Ebene positioniert sind, um das eine oder die mehreren Kabel von der ersten und der zweiten Seite (A, B) der ersten Säule (102) von Nutenplatten zu einer zweiten Säule (104) von Nutenplatten zu überführen; und
mindestens ein bogenförmiges Merkmal (140a, 140b), das von einer Basis (142) der Kabelführung vorsteht und eine Vielzahl von Kabeldurchgängen zwischen der ersten, der zweiten und der dritten Öffnung definiert, und wobei die erste und die zweite Öffnung (202a, 202b) auf der ersten Seite (201) in eine gleiche Richtung weisen und die dritte Öffnung (204a) auf der zweiten Seite (203) in eine orthogonale Richtung weist.

2. Kabelführung nach Anspruch 1, die ferner einen Vorsprung (207) auf der zweiten Seite umfasst, und wobei sich die dritte Öffnung an einem distalen Ende des Vorsprungs befindet.

3. Kabelführung nach Anspruch 2, wobei sich der Vorsprung in einer Richtung parallel zu der ersten Seite erstreckt und ein Übergang (209) zwischen der zweiten Seite und dem Vorsprung gekrümmt ist.

4. Kabelführung nach Anspruch 1, 2 oder 3, die ferner ein erstes bogenförmiges Merkmal (140a) in der Nähe der ersten Öffnung und ein zweites bogenförmiges Merkmal (140b) in der Nähe der zweiten Öffnung umfasst, wobei ein Durchgang zwischen dem ersten und dem zweiten bogenförmigen Merkmal definiert ist.

5. Kabelführung nach einem der vorhergehenden Ansprüche, die ferner eine Stütze (138) umfasst, die sich von der Kabelführung erstreckt und so aufgebaut ist, dass sie eine Vielzahl von schwenkbaren Trägern stützt.

6. Kabelführung nach einem der vorhergehenden Ansprüche, die ferner eine Vielzahl von Laschen (132) zum Management von Kabeln innerhalb der Vielzahl von Kabeldurchgängen umfasst.

7. Kabelführung nach einem der vorhergehenden Ansprüche, die ferner eine vierte Öffnung auf einer dritten Seite umfasst, wobei die dritte Seite orthogonal zu der ersten Seite und parallel zu der zweiten Seite ist.

8. Kabelführung nach Anspruch 7, wobei die Kabelführung so aufgebaut ist, dass sie das eine oder die mehreren Kabel von einer mittleren Säule von Nutenplatten, die eine Vielzahl von schwenkbaren Trägern aufweist, zu einer ersten Seitensäule und einer zweiten Seitensäule von Nutenplatten, die jeweils eine Vielzahl von schwenkbaren Trägern aufweisen, überführt.

9. Telekommunikationsabschlussvorrichtung, die die Kabelführung nach einem der Ansprüche 1 bis 6 umfasst, wobei die Telekommunikationsabschlussvorrichtung ferner Folgendes umfasst:
eine Platte;
die erste Säule von Nutenplatten, die an der Platte befestigt ist, wobei die erste Säule von Nutenplatten eine Vielzahl von schwenkbaren Trägern aufweist;
wobei die Kabelführung eine erste Kabelführung ist, die sich an dem Ende der ersten Säule von Nutenplatten befindet und so aufgebaut ist, dass sie ein oder mehrere Kabel von der ersten Säule von Nutenplatten überführt; und die zweite Säule von Nutenplatten, die an der Platte befestigt ist, wobei die zweite Säule von Nutenplatten eine Vielzahl von schwenkbaren Trägern aufweist, und die erste Kabelführung so aufgebaut ist, dass sie ein oder mehrere Kabel von der ersten Säule von Nutenplatten zu der zweiten Säule von Nutenplatten überträgt und ein oder mehrere Kabel von der zweiten Säule von Nutenplatten aufnimmt.

10. Telekommunikationsabschlussvorrichtung nach Anspruch 9, die ferner eine zweite Kabelführung (200a, 200b) umfasst, die sich an einem Ende der zweiten Säule von Nutenplatten befindet, wobei die erste und die zweite Kabelführung (200a, 200b) gespiegelte Teile sind, die jeweils einen Vorsprung (207) umfassen, und wobei die Vorsprünge aneinander auf der Platte anliegen, um das eine oder die mehreren Kabel (130) durch die dritte Öffnung (204a, 204b) von jeder der ersten und der zweiten Kabelführung zu überführen und aufzunehmen.

11. Telekommunikationsabschlussvorrichtung nach Anspruch 10, die ferner eine dritte Kabelführung (200c) umfasst, die so aufgebaut ist, dass sie ein oder mehrere Kabel zwischen einer mittleren Säule von Nutenplatten und der ersten und der zweiten Säule von Nutenplatten überführt.

12. Verfahren zum Führen von Kabeln im Inneren der Telekommunikationsabschlussvorrichtung nach Anspruch 10, wobei das Verfahren Folgendes umfasst:
Führen eines Kabels von der ersten Säule von Nutenplatten durch die erste oder die zweite Öffnung der ersten Kabelführung;
Führen des Kabels um das mindestens eine bogenförmige Merkmal der ersten Kabelführung;
Führen des Kabels durch die dritte Öffnung der ersten Kabelführung zu der zweiten Säule von Nutenplatten, wobei die dritte Öffnung orthogonal zu der ersten und der zweiten Öffnung ist; Führen des Kabels zu einer zweiten Kabelführung vor dem Führen des Kabels zu der zweiten Säule von Nutenplatten; Führen des Kabels um mindestens ein bogenförmiges Merkmal der zweiten Kabelführung; und
Führen des Kabels zu einer ersten oder einer zweiten Öffnung der zweiten Kabelführung.

13. Telekommunikationsabschlussvorrichtung nach einem der Ansprüche 9 bis 11, wobei mindestens eine der Öffnungen der Kabelführungen blockiert oder geschlossen werden kann.

14. Telekommunikationsabschlussvorrichtung nach einem der Ansprüche 9 bis 11, wobei durch die Kabelführungen ein bogenförmiger interner Pfad bereitgestellt wird, der sich von einer Seite der Kabelführungen zu einer gegenüberliegenden Seite erstreckt, und wobei eine der Seiten einen bogenförmigen Ausgangspfad umfasst.

15. Telekommunikationsabschlussvorrichtung nach Anspruch 9, wobei mindestens zwei Säulen von Nutenplatten (302, 304) zum Halten einer Vielzahl von schwenkbar angebrachten Trägern vorgesehen sind, vier Kabelführungen (402, 404, 406, 408) an gegenüberliegenden Enden von jeder der zwei Säulen vorgesehen sind und jede Säule mindestens einen Kabelmanager zum Management von ankommenden und abgehenden Fasern umfasst.

## Revendications

1. Guide de câble (200a, 200b, 200c, 402, 404, 406, 408, 620, 622, 720a, 720b, 720c, 720d) pour une fermeture de télécommunications, le guide de câble comprenant :
une première ouverture (202a) sur un premier côté (201) pour recevoir un ou plusieurs câbles (130) depuis un premier côté (A) d'une première colonne (102) de plaques rainurées ;
une deuxième ouverture (202b) opposée à la première ouverture sur le premier côté pour recevoir le ou les câbles depuis un deuxième côté (B) de la première colonne de plaques rainurées ;
une troisième ouverture (204a) sur un deuxième côté (203), le deuxième côté étant orthogonal au premier côté, les première, deuxième et troisième ouvertures étant positionnées sur un plan commun pour transférer le ou les câbles depuis les premier et deuxième côtés (A, B) de la première colonne (102) de plaques rainurées vers une deuxième colonne (104) de plaques rainurées ; et
l'au moins un élément arqué (140a, 140b) faisant saillie à partir d'une base (142) du guide-câble et définissant une pluralité de passages de câble entre les première, deuxième et troisième ouvertures, et dans lequel les première et deuxième ouvertures (202a, 202b) sur le premier côté (201) font face dans une même direction, et la troisième ouverture (204a) sur le deuxième côté (203) fait face dans une direction orthogonale.

2. Guide-câble selon la revendication 1, comprenant en outre une saillie (207) sur le deuxième côté, et dans lequel la troisième ouverture est au niveau d'une extrémité distale de la saillie.

3. Guide-câble selon la revendication 2, dans lequel la saillie s'étend dans une direction parallèle au premier côté, et une transition (209) entre le deuxième côté et la saillie est incurvée.

4. Guide-câble selon les revendications 1, 2 ou 3, comprenant en outre un premier élément arqué (140a) à proximité de la première ouverture, et un deuxième élément arqué (140b) à proximité de la deuxième ouverture, dans lequel un passage est défini entre les premier et deuxième éléments arqués.

5. Guide-câble selon l'une quelconque des revendications précédentes, comprenant en outre un support (138) s'étendant à partir du guide-câble, et structuré pour supporter une pluralité de plateaux pivotants.

6. Guide-câble selon l'une quelconque des revendications précédentes, comprenant en outre une pluralité de pattes (132) pour gérer les câbles à l'intérieur de la pluralité de passages de câbles.

7. Guide-câble selon l'une quelconque des revendications précédentes, comprenant en outre une quatrième ouverture sur un troisième côté, le troisième côté étant orthogonal au premier côté et parallèle au deuxième côté.

8. Guide-câble selon la revendication 7, dans lequel le guide-câble est structuré pour transférer le ou les câbles d'une colonne médiane de plaques rainurées ayant une pluralité de plateaux pivotants à une première colonne latérale et une deuxième colonne latérale de plaques rainurées ayant chacune une pluralité de plateaux pivotants.

9. Fermeture de télécommunications comprenant le guide-câble selon l'une quelconque des revendications 1 à 6, la fermeture de télécommunications comprenant en outre :
un panneau ;
la première colonne de plaques rainurées fixée au panneau, la première colonne de plaques rainurées ayant une pluralité de plateaux pivotants ;
dans lequel le guide de câble est un premier guide de câble situé à l'extrémité de la première colonne de plaques rainurées et structuré pour transférer un ou plusieurs câbles à partir de la première colonne de plaques rainurées ; et la deuxième colonne de plaques rainurées fixées au panneau, la deuxième colonne de plaques rainurées ayant une pluralité de plateaux pivotants, et le premier guide-câble étant structuré pour transférer un ou plusieurs câbles de la première colonne de plaques rainurées à la deuxième colonne de plaques rainurées, et de recevoir un ou plusieurs câbles provenant de la deuxième colonne de plaques rainurées.

10. Fermeture de télécommunications selon la revendication 9, comprenant en outre un deuxième guide de câble (200a, 200b) situé à une extrémité de la deuxième colonne de plaques rainurées, dans laquelle les premier et deuxième guides de câble (200a, 200b) sont des parties réfléchissantes comprenant chacune une saillie (207), et dans laquelle les saillies viennent en butée l'une contre l'autre sur le panneau pour transférer et recevoir le ou les câbles (130) à travers la troisième ouverture (204a, 204b) de chacun des premier et deuxième guides et deuxième câbles.

11. Fermeture de télécommunications selon la revendication 10, comprenant en outre un troisième guide de câble (200c) structuré pour transférer un ou plusieurs câbles entre une colonne médiane de plaques rainurées et les première et deuxième colonnes de plaques rainurées.

12. Procédé d'acheminement de câbles à l'intérieur de la fermeture de télécommunications selon la revendication 10, le procédé comprenant :
l'acheminement d'un câble depuis la première colonne de plaques rainurées à travers la première ou la deuxième ouverture du premier guide de câble ;
le cheminement du câble autour de l'au moins un élément arqué du premier guide de câble ;
l'acheminement du câble à travers la troisième ouverture du premier guide de câble vers la deuxième colonne de plaques rainurées, la troisième ouverture étant orthogonale aux première et deuxième ouvertures ; l'acheminement du câble vers un deuxième guide de câble avant l'acheminement du câble vers la deuxième colonne de plaques rainurées ; l'acheminement du câble autour de l'au moins un élément arqué du deuxième guide de câble ; et
l'acheminement du câble vers une première ou une deuxième ouverture du deuxième guide de câble.

13. Fermeture de télécommunications selon l'une quelconque des revendications 9 à 11, dans laquelle l'au moins une des ouvertures des guides de câbles est capable d'être bloquée ou fermée.

14. Fermeture de télécommunications selon l'une quelconque des revendications 9 à 11, dans laquelle un trajet interne arqué est fourni par les guides de câbles s'étendant depuis un côté des guides de câbles vers un côté opposé, et dans laquelle l'un des côtés comprend un trajet de sortie arqué.

15. Fermeture de télécommunications selon la revendication 9, dans laquelle l'au moins deux colonnes de plaques à rainures (302, 304) sont prévues pour maintenir une pluralité de plateaux montés de manière pivotante, quatre guides de câbles (402, 404, 406, 408) sont prévus sur des extrémités opposées de chacune des deux colonnes, et chaque colonne comprend l'au moins un gestionnaire de câbles pour gérer les fibres entrantes et sortantes.
